(19) Europäisches Patentamt
European Patent Office
Office européen des brevets

(11) **EP 3 251 318 B1**

(12) **FASCICULE DE BREVET EUROPEEN**

(45) Date de publication et mention
de la délivrance du brevet:
**27.05.2020 Bulletin 2020/22**

(21) Numéro de dépôt: **16709987.8**

(22) Date de dépôt: **01.02.2016**

(51) Int Cl.:
***H04L 27/26*** *(2006.01)*

(86) Numéro de dépôt international:
**PCT/FR2016/050207**

(87) Numéro de publication internationale:
**WO 2016/120577 (04.08.2016 Gazette 2016/31)**

(54) **PROCÉDÉ ET DISPOSITIF DE MODULATION DE SYMBOLES COMPLEXES, PROCÉDÉ ET DISPOSITIF DE DÉMODULATION ET PROGRAMMES D'ORDINATEUR CORRESPONDANTS**

VERFAHREN UND VORRICHTUNG ZUR MODULATION VON KOMPLEXEN SIGNALEN, DEMODULATIONSVERFAHREN UND VORRICHTUNG SOWIE ENTSPRECHENDE COMPUTERPROGRAMME

METHOD AND DEVICE FOR MODULATING COMPLEX SYMBOLS, DEMODULATION METHOD AND DEVICE, AND CORRESPONDING COMPUTER PROGRAMS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.01.2015 FR 1550728**

(43) Date de publication de la demande:
**06.12.2017 Bulletin 2017/49**

(73) Titulaire: **Orange**
**75015 Paris (FR)**

(72) Inventeur: **LIN, Hao**
**35510 Cesson-Sévigné (FR)**

(74) Mandataire: **Vidon Brevets & Stratégie**
**16B, rue de Jouanet**
**BP 90333**
**35703 Rennes Cedex 7 (FR)**

(56) Documents cités:
• **M Bellanger ET AL: "FBMC Physical Layer: a Primer", , 27 mai 2010 (2010-05-27), pages 1-31, XP055239692, Extrait de l'Internet: URL:http://www.ict-phydyas.org/teamspace/internal-folder/FBMC-Primer_06-2010.pdf [extrait le 2016-01-08]**

**Description**

**1. Domaine de l'invention**

Le domaine de l'invention est celui des communications mettant en œuvre une modulation multiporteuse.

Plus précisément, l'invention concerne une nouvelle technique de modulation sur un multiplex de porteuses, appelée ci-après FB-OFDM pour « Filter Bank Orthogonal Frequency Division Multiplexing », et une technique de démodulation correspondante.

L'invention trouve notamment des applications dans le domaine des communications sans fil (DAB, DVB(-T, T2, H, NGH), WiFi, WiMAX, WLAN, optique non guidée, etc.) ou filaires (xDSL, PLC, optique, etc.) mettant en œuvre une modulation multiporteuse.

En particulier, l'invention trouve des applications dans le domaine des communications cellulaires, sur voie montante ou descendante, par exemple dans les systèmes LTE/LTE-A ou les systèmes de futures générations (5G, etc).

**2. Art antérieur**

On connaît plusieurs techniques permettant de générer des signaux à porteuses multiples.

Parmi ces techniques, on connaît les modulations de type OFDM, qui permettent de générer un signal à porteuses multiples à partir de symboles complexes, et les modulations à base de bancs de filtre, de type FBMC (« Filter-Bank multi-carrier »), qui permettent de générer un signal à porteuses multiples à partir de symboles réels.

Les principales techniques utilisées pour générer un signal multiporteuse de type FBMC sont le FS-FBMC (« Frequency Sampling-FBMC ») et le PPN-FBMC (« PolyPhase Network-FBMC »). Ces différentes techniques sont notamment présentées dans le document « FBMC physical layer : a primer », M. Bellanger, PHYDYAS, Juin 2010.

Le FS-FBMC et le PPN-FBMC sont des techniques prometteuses pour la génération de signaux à porteuses multiples, car elles permettent d'obtenir un signal présentant un spectre bien localisé dans le domaine temporel et dans le domaine fréquentiel, tout en s'affranchissant de l'insertion d'un intervalle de garde, nécessaire en OFDM.

Elles souffrent toutefois de plusieurs inconvénients, notamment en termes de complexité (en nombre de calculs) et de compatibilité avec d'autres techniques de traitement du signal classiquement utilisées en OFDM (comme par exemple le codage espace/temps, l'estimation de canal, l'égalisation, etc).

Il existe donc un besoin pour une nouvelle technique de modulation à porteuses multiples, ne présentant pas l'ensemble des inconvénients de l'art antérieur.

**3. Exposé de l'invention**

L'invention est comme défini dans les revendications indépendantes.

Les symboles complexes font partie d'un signal de communication et sont associés à une ou plusieurs applications données (de nature éventuellement différente : audio, vidéo, texte, etc) qui nécessitent de transmettre le signal entre deux entités de traitement de ce signal.

L'invention propose ainsi une nouvelle solution pour la génération d'un signal à porteuses multiples à partir d'au moins un bloc de symboles complexes, offrant plusieurs avantages par rapport aux modulations de type FBMC ou OFDM selon l'art antérieur.

Notamment, la technique de modulation proposée présente une complexité réduite par rapport aux modulations de type FBMC selon l'art antérieur.

En particulier, la technique de modulation proposée repose sur la génération d'un signal à porteuses multiples à partir de symboles complexes, comme les modulations de type OFDM, alors que les modulations de type FBMC reposent sur la génération d'un signal à porteuses multiples à partir de symboles réels.

Du fait de l'utilisation de symboles réels en entrée du modulateur FBMC, un recouvrement entre au moins deux symboles multiporteuses est nécessaire après les opérations de transformée de Fourier inverse, alors que ce recouvrement entre symboles multiporteuses n'est pas nécessaire pour une modulation de type OFDM ou selon l'invention.

De ce fait, il est possible d'utiliser les techniques de traitement du signal classiquement utilisées dans le cadre des modulations OFDM, comme le codage MIMO, les techniques de réduction du facteur de crête (en anglais PAPR ou « Peak-to-Average Power Ratio »), les techniques d'estimation de canal, d'égalisation, etc, avec une technique de modulation selon l'invention. La technique de modulation proposée est donc compatible avec d'autres techniques de traitement du signal classiquement utilisées en OFDM.

L'inventeur est en effet parvenu à démontrer que l'utilisation de symboles à valeurs réelles en entrée du modulateur (obtenues en séparant les parties réelle et imaginaire de chaque symbole complexe) n'est pas une condition nécessaire à la reconstruction parfaite des symboles $(C_{N \times K} = \hat{C}_{N \times K})$. L'inventeur a démontré qu'en utilisant un motif spécifique de symboles, il est possible d'utiliser des symboles à valeurs complexes en entrée du modulateur et de satisfaire la condition de reconstruction parfaite des symboles.

L'invention propose donc une nouvelle technique de répétition/distribution des symboles complexes, mise en œuvre au cours d'une étape d'extension d'un bloc de base de symboles complexes, permettant d'obtenir un bloc étendu définissant un motif spécifique. On note que de tels symboles complexes peuvent être des symboles de données, présentant éventuellement une valeur nulle, ou des pilotes. Eventuellement, la partie imaginaire de certains symboles complexes peut être nulle.

L'invention permet par ailleurs de simplifier l'opération de mise en trame, puisqu'elle permet de moduler des blocs de symboles complexes, à la différence du FBMC.

Par rapport aux modulations de type OFDM, la technique de modulation proposée génère un signal mieux localisé en fréquence et présentant une meilleure efficacité spectrale. Elle est également plus robuste que la modulation OFDM lorsque la synchronisation n'est pas parfaite. En outre, la technique de modulation proposée entraîne une diversité de symboles, du fait de l'utilisation de symboles complexes et de leur conjugué grâce à l'extension du bloc de base), ce qui n'est pas le cas pour la modulation de type OFDM.

On note que les lignes et les colonnes du bloc de base peuvent être permutées avant extension. De même, certaines lignes ou colonnes du bloc étendu peuvent éventuellement être permutées après extension.

Selon un mode de réalisation particulier de l'invention, le procédé de modulation met également en œuvre un entrelacement des échantillons fréquentiels obtenus en sortie de l'étape de mappage, préalablement à l'étape de transformation du domaine fréquentiel vers le domaine temporel.

Un tel entrelacement permet notamment d'exploiter la diversité générée par l'étape d'extension, en augmentant la distance entre un symbole complexe et son conjugué.

En particulier, on note qu'un tel entrelacement modifie les positions des échantillons fréquentiels obtenus à partir des symboles complexes de type symboles de données, mais ne modifie pas les positions des échantillons fréquentiels nuls ou les positions des échantillons fréquentiels obtenus à partir des symboles complexes de type pilotes s'il y en a (car les positions des pilotes doivent être connues du démodulateur).

L'entrelacement est donc appliqué sur $(N \times K + (K - 1) - T)$ échantillons fréquentiels, où $N \times K + (K - 1)$ correspond au nombre d'échantillons fréquentiels non nuls et $T$ au nombre d'échantillons fréquentiels obtenus à partir de pilotes.

Selon un mode de réalisation particulier de l'invention, l'étape d'extension met en œuvre les sous-étapes suivantes :

- sélection aléatoire de premiers N symboles complexes du bloc de base, et affectation à la colonne de référence, correspondant à la colonne centrale du bloc étendu ;

  ∘ si $K$ est impair :

   ▪ détermination des conjugués des $N(K - 1)$ symboles complexes restants du bloc de base ;
   ▪ affectation d'une première moitié des $N(K - 1)$ symboles complexes restants, et de leur conjugué respectif, à (K - 1) colonnes à gauche de la colonne de référence, selon une relation de symétrie entre les symboles complexes restants et leur conjugué respectif, et
   ▪ affectation d'une deuxième moitié des $N(K - 1)$ symboles complexes restants, et de leur conjugué respectif, à (K - 1) colonnes à droite de la colonne de référence, selon une relation de symétrie entre les symboles complexes restants et leur conjugué respectif,

  ∘ si $K$ est pair :

   ▪ sélection aléatoire des N deuxièmes symboles complexes du bloc de base ;
   ▪ détermination de la partie réelle et de la partie ,imaginaire des $N$ deuxièmes symboles complexes ;
   ▪ affectation d'une des parties réelle ou imaginaire de chacun des $N$ deuxièmes symboles complexes à une colonne centrale parmi les colonnes à gauche de la colonne de référence du bloc étendu, dite colonne centrale gauche ;
   ▪ affectation de l'autre des parties réelle ou imaginaire de chacun des $N$ deuxièmes symboles complexes à une colonne centrale parmi les colonnes à droite de la colonne de référence du bloc étendu, dite colonne centrale droite ;
   ▪ détermination des conjugués des $N(K - 2)$ symboles complexes restants du bloc de base ;
   ▪ affectation d'une première moitié des $N(K - 2)$ symboles complexes restants, et de leur conjugué respectif, aux colonnes à gauche de la colonne de référence, selon une relation de symétrie entre les symboles complexes restants et leur conjugué respectif par rapport à la colonne centrale gauche, et
   ▪ affectation d'une deuxième moitié des $N(K - 2)$ symboles complexes restants, et de leur conjugué respectif, aux colonnes à droite de la colonne de référence, selon une relation de symétrie entre les symboles complexes restants et leur conjugué respectif par rapport à la colonne centrale droite.

Selon ce mode de réalisation particulier de l'invention, on construit donc un bloc étendu à partir des symboles complexes du bloc de base et de leurs conjugués, et, si K est pair, de la partie réelle et de la partie imaginaire de N symboles complexes du bloc de base.

Le bloc étendu comprend toujours un nombre impair de colonnes ($2K$ - 1).

Par exemple, on affecte à la colonne centrale du bloc étendu N symboles complexes choisis aléatoirement parmi les $NK$ symboles complexes du bloc de base.

Si $K$ est impair, on affecte aux $K$ - 1 colonnes à gauche de la colonne centrale une première moitié des $NK-N$ symboles complexes restants du bloc de base (i.e. non affectés à la colonne centrale du bloc étendu) et leur conjugué respectif. Chaque symbole complexe et son conjugué sont placés de façon à respecter une relation de symétrie par rapport à un axe de symétrie placé au milieu des $K$ - 1 colonnes à gauche de la colonne centrale. De la même façon, on affecte aux $K$ - 1 colonnes à droite de la colonne centrale une deuxième moitié des $NK-N$ symboles complexes restants du bloc de base (i.e. non affectés à la colonne centrale du bloc étendu) et leur conjugué respectif. Chaque symbole complexe et son conjugué sont placés de façon à respecter une relation de symétrie par rapport à un axe de symétrie placé au milieu des $K$ - 1 colonnes à droite de la colonne centrale.

Si $K$ est pair, on sélectionne aléatoirement N symboles complexes parmi les $NK-N$ symboles complexes du bloc de base non affectés à la colonne centrale. On détermine ensuite les parties réelle et imaginaire de ces $N$ symboles complexes, que l'on affecte aléatoirement à la colonne située au milieu des $K$ - 1 colonnes à gauche de la colonne centrale, appelée colonne centrale gauche, et à la colonne située au milieu des $K$ - 1 colonnes à droite de la colonne centrale, appelée colonne centrale droite. On affecte aux colonnes à gauche de la colonne centrale, hors colonne centrale gauche, une première moitié des $NK-2N$ symboles complexes restants du bloc de base (i.e. non affectés à la colonne centrale ou aux colonnes centrales gauche et droite du bloc étendu) et leur conjugué respectif. Chaque symbole complexe et son conjugué sont placés de façon à respecter une relation de symétrie par rapport à la colonne centrale gauche. De la même façon, on affecte aux colonnes à droite de la colonne centrale, hors colonne centrale droite, une deuxième moitié des $NK-2N$ symboles complexes restants du bloc de base (i.e. non affectés à la colonne centrale du bloc étendu ou aux colonnes centrales gauche et droite du bloc étendu) et leur conjugué respectif. Chaque symbole complexe et son conjugué sont placés de façon à respecter une relation de symétrie par rapport à la colonne centrale droite.

On note que la façon de construire le bloc étendu n'est pas limitée au mode de réalisation particulier décrit ci-dessus. Par exemple, si $K$ est pair, on peut choisir d'affecter d'abord $N$ symboles complexes du bloc de base à une colonne centrale du bloc étendu, puis $NK-2N$ symboles complexes aux colonnes à gauche de la colonne centrale, hors la colonne centrale gauche, et $NK-2N$ symboles complexes aux colonnes à droite de la colonne centrale, hors la colonne centrale droite, puis de déterminer les parties réelle et imaginaire des $N$ symboles complexes restants pour les affecter aux colonnes centrales gauche et droite.

Quelle que soit la façon de construire le bloc étendu, on cherche selon ce mode de réalisation particulier à obtenir un bloc étendu définissant un motif spécifique tel que :

- si $K$ est impair, la colonne centrale du bloc étendu comprend N symboles complexes, les colonnes à gauche de la colonne centrale comprennent $\frac{NK-N}{2}$ symboles complexes et leur conjugué respectif, en respectant une relation de symétrie par rapport à un axe de symétrie vertical placé au milieu des colonnes à gauche de la colonne centrale, et les colonnes à droite de la colonne centrale comprennent $\frac{NK-N}{2}$ symboles complexes et leur conjugué respectif, en respectant une relation de symétrie par rapport à un axe de symétrie vertical placé au milieu des colonnes à droite de la colonne centrale, chaque symbole complexe du bloc de base apparaissant une seule fois dans le bloc étendu,

- si $K$ est impair, la colonne centrale du bloc étendu comprend N symboles complexes, les colonnes centrales gauche et droite comprennent les parties réelle ou imaginaire de N symboles complexes, les colonnes à gauche de la colonne centrale, hors colonne centrale gauche, comprennent $\frac{NK-2N}{2}$ symboles complexes et leur conjugué respectif, en respectant une relation de symétrie par rapport à la colonne centrale gauche, et les colonnes à droite de la colonne centrale, hors colonne centrale droite, comprennent $\frac{NK-2N}{2}$ symboles complexes et leur conjugué respectif, en respectant une relation de symétrie par rapport à la colonne centrale droite, chaque symbole complexe du bloc de base apparaissant une seule fois dans le bloc étendu, sauf s'il est décomposé en sa partie réelle et sa partie imaginaire.

En particulier, les colonnes du bloc étendu ainsi construit peuvent être permutées. De ce fait, après permutation, la colonne de référence n'est pas nécessairement la colonne centrale du bloc étendu.

Selon une caractéristique spécifique de l'invention, si $K$ est impair ou si $K$ est pair et que l'on ne considère pas la colonne centrale gauche et la colonne centrale droite, chaque ligne du bloc étendu est formée d'une alternance de symboles complexes non conjugués et de symboles complexes conjugués.

Selon un mode de réalisation particulier de l'invention, l'étape de déphasage met en oeuvre un déphasage ligne par ligne du bloc étendu, mettant en oeuvre une multiplication des éléments d'une *(n+1)*-ième ligne du bloc étendu par une valeur égale à $\left(\sqrt{-1}\right)^n$, avec *n* allant de *0* à *N-1*, à l'exception de l'élément correspondant à la colonne de référence, qui est multiplié par 1.

Par exemple, le bloc étendu déphasé $\mathbf{C}^{\mathrm{E}}_{\mathrm{N}\times(2\mathrm{K}-1)}$ est obtenu à partir des équations suivantes :

$$\mathbf{C}^{\mathrm{E}}_{\mathrm{N}\times(2K-1)} = \mathbf{J}_{N\times(2K-1)} \odot \bar{\mathbf{C}}^{\mathrm{E}}_{\mathrm{N}\times(2K-1)}$$

avec :

$$\mathbf{J}_{N\times 2K-1} = \begin{bmatrix} \mathbf{j}^0_{1\times 2K-1} \\ \vdots \\ \mathbf{j}^{N-1}_{1\times 2K-1} \end{bmatrix}$$

- si *K* pair :

$$\bar{\mathbf{C}}^{E}_{N\times 2K-1} = \begin{cases} \bar{C}^E_{n,k} = (\bar{C}^E_{n,K-k})^* = C_{n,k}, k \in [0,(K/2)-2] \\ \bar{C}^E_{n,(K/2)-1} = \sqrt{2}\Re\{C_{n,(K/2)-1}\} \\ \bar{C}^E_{n,(K/2)-1+K} = \sqrt{2}\Im\{C_{n,(K/2)-1}\} \\ \bar{C}^E_{n,K-1} = C_{n,K/2} \\ \bar{C}^E_{n,k+K} = (\bar{C}^E_{n,2K-1-k})^* = C_{n,k+K/2+1}, k \in [0,(K/2)-2] \end{cases}$$

- si K est impair :

$$\bar{\mathbf{C}}^{E}_{N\times 2K-1} = \begin{cases} \bar{C}^E_{n,k} = (\bar{C}^E_{n,K-k})^* = C_{n,k}, k \in [0,(K-1)/2-1] \\ \bar{C}^E_{n,K-1} = C_{n,(K-1)/2} \\ \bar{C}^E_{n,k+K} = (\bar{C}^E_{n,2K-1-k})^* = C_{n,k+(K-1)/2+1}, k \in [0,(K-1)/2-1] \end{cases}$$

- $C_{\mathrm{N}\times\mathrm{K}} = [C_{n,k}]_{n=0,..,N-1\ et\ k=0,..,K-1}$ ledit bloc de base,
- *n* un entier allant de *0* à *N-1,*
- *k* un entier allant de *0* à *K-1,*
- * l'opérateur conjugué,
- ⊙ le produit de Hadamard,
- $\mathbf{j}^n_{1\times(2K-1)}$ un vecteur dont tous les éléments sont égaux à $\left(\sqrt{-1}\right)^n$, sauf l'élément de même indice que la colonne de référence qui est égal 1.

En particulier, si un entrelacement aléatoire des colonnes est mis en œuvre avant l'étape d'extension, le bloc étendu déphasé est obtenu à partir des mêmes équations, avec un ordre différent.

Selon une caractéristique particulière de l'invention, l'étape de filtrage met en œuvre un filtre de longueur 2*K* - 1, tel que la valeur du coefficient du filtre de même indice que la colonne de référence, dit coefficient de référence, est égale à 1, et les valeurs des autres coefficients du filtre sont symétriques par rapport au coefficient de référence.

En particulier, tous les coefficients du filtre sont à valeur réelle.

Ainsi, en l'absence de permutations, si la colonne de référence est la colonne centrale du bloc étendu, le filtre présente un coefficient central égal à 1, et les valeurs des autres coefficients sont symétriques par rapport au coefficient central. Par exemple, pour *K=4,* les sept coefficients du filtre sont respectivement $h_3^f$, $h_2^f$, $h_1^f$, $1$, $h_1^f$, $h_2^f$, $h_3^f$.

Une telle symétrie permet notamment d'obtenir un signal bien localisé en fréquence.

En particulier, les coefficients $h_k^f$ du filtre peuvent être calculés de façon à respecter le critère Nyquist, tel que :

$$h_k^f = \begin{cases} (h_0^f)^2 = 1 \\ (h_k^f)^2 + (h_{K-k}^f)^2 = 1 \text{ , pour } k \in [1, K-1] \end{cases}$$

Selon un exemple de réalisation, l'étape de mappage met en œuvre, pour chaque ligne du bloc filtré, un décalage cyclique modulo *MK,* permettant d'amener l'élément appartenant à la colonne de référence en $([(n+m)K \bmod MK]+1)$ -ième position, avec *m* l'indice de la première porteuse allouée à un utilisateur donné, avec *m* allant de 0 à *M - N -* 1 et *n* l'indice de la ligne allant de 0 à (*N*-1), et une sommation colonne par colonne des éléments obtenus après décalage cyclique.

En particulier, si *m* = 0, l'étape de mappage met en œuvre, pour chaque ligne du bloc filtré, un décalage cyclique de *nK* positions modulo *MK* et une sommation colonne par colonne des éléments obtenus après décalage cyclique.

Selon une autre caractéristique particulière de l'invention, lorsque *N* < *M*, on affecte une valeur nulle au premier élément de chaque colonne du bloc étendu précédent la colonne de référence, ou bien une valeur nulle au dernier élément de chaque colonne du bloc étendu suivant la colonne de référence.

On évite de cette façon les problèmes de recouvrement de spectre, lorsque la bande (comprenant M porteuses) est répartie entre plusieurs utilisateurs, auxquels on alloue N porteuses chacun.

Dans ce cas particulier, si un entrelacement est mis en œuvre entre les étapes de mappage et de transformation du domaine fréquentiel vers le domaine temporel, cet entrelacement est appliqué sur ($N{\times}K$ - *T*) échantillons fréquentiels, où *NxK* correspond au nombre d'échantillons fréquentiels non nuls et *T* au nombre d'échantillons fréquentiels obtenus à partir de pilotes. De plus, dans ce cas particulier, il n'est pas possible d'entrelacer des échantillons fréquentiels obtenus à partir de symboles complexes issus/destinés à des utilisateurs distincts.

Selon un mode de réalisation particulier, *K* est strictement supérieur à 1.

Dans un autre mode de réalisation, l'invention concerne un dispositif de modulation de symboles complexes, délivrant un signal à porteuses multiples, comprenant les modules suivants, activés pour au moins un bloc de *NxK* symboles complexes, dit bloc de base, avec *N* et *K* des entiers tels que *N* > 1 et *K* ≥ 1 :

- un module d'extension du bloc de base, délivrant un bloc de $N{\times}(2K$ - 1) éléments, dit bloc étendu, comprenant :

  ∘ si *K* est impair :

  ▪ une colonne comprenant *N* éléments correspondant à *N* premiers symboles complexes du bloc de base, dite colonne de référence ;
  ▪ 2*K* - 2 colonnes comprenant *N*(2*K* - 2) éléments, dont *N*(*K* - 1) éléments correspondant aux *NK* - *N* symboles complexes restants du bloc de base et *N*(*K* - 1) éléments correspondant aux conjugués des *NK - N* symboles complexes restants du bloc de base ;

  ∘ si *K* est pair :

  ▪ une colonne comprenant *N* éléments correspondant à *N* premiers symboles complexes du bloc de base, dite colonne de référence ;
  ▪ deux colonnes comprenant 2*N* éléments, dont *N* éléments correspondant à la partie réelle de *N* deuxièmes symboles complexes du bloc de base, distincts des *N* premiers symboles complexes, et *N* éléments correspondant à la partie imaginaire des *N* deuxièmes symboles complexes ;
  ▪ 2*K* - 4 colonnes comprenant *N*(2*K* - 4) éléments, dont *N*(*K* - 2) éléments correspondant aux *NK* - 2*N* symboles complexes restants du bloc de base et *N*(*K* - 2) éléments correspondant aux conjugués des *NK - 2N* symboles complexes restants du bloc de base ;

- un module de déphasage du bloc étendu, délivrant un bloc étendu déphasé ;
- un module de filtrage du bloc étendu déphasé, délivrant un bloc de $N\times(2K$ - $1)$ éléments filtrés, dit bloc filtré,
- un module de mappage des $N\times(2K$ - $1)$ éléments filtrés du bloc filtré sur $MK$ échantillons fréquentiels, avec $M$ le nombre total de porteuses et $M \geq N$ ;
- un module de transformation des $MK$ échantillons fréquentiels du domaine fréquentiel vers le domaine temporel, délivrant le signal à porteuses multiples.

Un tel dispositif de modulation est notamment adapté à mettre en œuvre le procédé de modulation décrit précédemment. Il s'agit par exemple d'une station de base d'un réseau cellulaire pour une communication sur voie descendante, ou d'un terminal de type ordinateur, téléphone, tablette, boîtier décodeur (en anglais « set-top box »), etc., pour une communication sur voie montante. Ce dispositif pourra bien sûr comporter les différentes caractéristiques relatives au procédé de modulation selon l'invention, qui peuvent être combinées ou prises isolément. Ainsi, les caractéristiques et avantages de ce dispositif sont les mêmes que ceux du procédé décrit précédemment. Par conséquent, ils ne sont pas détaillés plus amplement.

L'invention concerne également un procédé de démodulation d'un signal à porteuses multiples, délivrant au moins un bloc de symboles complexes reconstruits, mettant en œuvre les étapes suivantes :

- transformation du signal à porteuses multiples du domaine temporel vers le domaine fréquentiel, délivrant $MK$ échantillons fréquentiels, avec $M$ et $K$ des entiers tels que $M > 1$ et $K \geq 1$,
- mappage des $MK$ échantillons fréquentiels sur un bloc de $N\times(2K$ - $1)$ éléments, avec $N$ un entier tel que $M \geq N > 1$, dit bloc démappé,
- filtrage du bloc démappé, délivrant un bloc de $N\times(2K$ - $1)$ éléments filtrés, dit bloc filtré,
- déphasage du bloc filtré, délivrant un bloc filtré déphasé ;
- reconstruction d'un bloc de base, à partir du bloc filtré déphasé, délivrant un bloc de $NxK$ symboles complexes reconstruits, dit bloc reconstruit, mettant en œuvre :

  ∘ si $K$ est impair : identification d'une colonne de référence de $N$ premiers éléments dans le bloc filtré déphasé, délivrant $N$ premiers symboles complexes reconstruits, et, pour les $N\times(2K$ - $1)$ - $N$ éléments restants du bloc filtré déphasé, sommation deux à deux d'un élément d'une ligne du bloc filtré déphasé avec le conjugué d'un autre élément de la même ligne, délivrant $\dfrac{N\times(2K-1)-N}{2}$ symboles complexes reconstruits,
  ∘ si $K$ est pair : identification d'une colonne de référence de $N$ premiers éléments dans le bloc filtré déphasé, délivrant $N$ premiers symboles complexes reconstruits, pour $2N$ deuxièmes éléments du bloc filtré déphasé, différents des $N$ premiers éléments, sommation deux à deux des parties réelles des $2N$ deuxièmes éléments, délivrant $N$ deuxièmes symboles complexes reconstruits, et pour les $N\times(2K$ - $1)$ - $3N$ éléments restants du bloc filtré déphasé, sommation deux à deux d'un élément d'une ligne du bloc filtré déphasé avec le conjugué d'un autre élément de la même ligne, délivrant $\dfrac{N\times(2K-1)-3N}{2}$ symboles complexes reconstruits.

L'invention propose ainsi une nouvelle technique pour la mise en œuvre d'une démodulation d'un signal à porteuses multiples, permettant de reconstruire au moins un bloc de symboles complexes.

Comme déjà indiqué, la solution proposée offre une complexité réduite et une meilleure compatibilité avec les modules de traitement du signal existants que les techniques de type FBMC de l'art antérieur.

En particulier, un tel procédé de démodulation est notamment adapté à démoduler un signal à porteuses multiples émis selon le procédé de modulation décrit ci-dessus. Les opérations de transformation du domaine temporel vers le domaine fréquentiel, mappage, filtrage, déphasage, reconstruction d'un bloc de base mettent donc en œuvre des opérations duales aux opérations d'extension, déphasage, filtrage, mappage, transformation du domaine fréquentiel vers le domaine temporel mises en œuvre côté modulation.

Les caractéristiques et avantages de ce procédé de démodulation sont les mêmes que ceux du procédé de modulation. Par conséquent, ils ne sont pas détaillés plus amplement.

Selon un mode de réalisation particulier de l'invention, le procédé de démodulation met également en œuvre un désentrelacement des échantillons fréquentiels obtenus en sortie de l'étape de transformation du domaine temporel vers le domaine fréquentiel, préalablement à l'étape de mappage.

Un tel désentrelacement effectue une opération inverse à un entrelacement mis en ouvre côté modulation. Il permet notamment de remettre en ordre les échantillons fréquentiels.

A nouveau, on note qu'un tel entrelacement modifie les positions des échantillons fréquentiels obtenus à partir des symboles de données, et non les positions des échantillons fréquentiels nuls ou les positions des échantillons fréquentiels obtenus à partir des pilotes.

Par exemple, le bloc reconstruit $\hat{C}_{N \times K}$ est obtenu à partir des équations suivantes :

- si *K* est impair :

$$\hat{C}_{n,k} = \begin{cases} \hat{C}_{n,k} = \tilde{C}_{n,k} + \tilde{C}^*_{n,K-k}, k \in [0, (K/2) - 2] \\ \hat{C}_{n,(K/2)-1} = \sqrt{2}\left(\Re\{\tilde{C}_{n,(K/2)-1}\} + j\Re\{\tilde{C}_{m,(K/2)-1+K}\}\right) \\ \hat{C}_{n,K/2} = \tilde{C}_{n,K-1} \\ \hat{C}_{n,k+K/2+1} = \tilde{C}_{n,k+K} + (\tilde{C}_{n,2K-1-k})^* k \in [0, (K/2) - 2] \end{cases}$$

- si *K* est pair:

$$\hat{C}_{n,k} = \begin{cases} \hat{C}_{n,k} = \tilde{C}_{n,k} + \tilde{C}^*_{n,K-k}, k \in [0, (K-1)/2 - 1] \\ \hat{C}_{n,(K-1)/2} = \tilde{C}_{n,K-1} \\ \hat{C}_{n,k+(K-1)/2+1} = \tilde{C}_{n,k+K} + (\tilde{C}_{n,2K-1-k})^*, k \in [0, (K-1)/2 - 1] \end{cases}$$

avec :

$$\tilde{\mathbf{C}}_{N \times (2K-1)} = \mathbf{J}^*_{N \times (2K-1)} \odot \hat{\mathbf{C}}^{\mathbf{E}}_{N \times (2K-1)}$$

$$\mathbf{J}_{N \times 2K-1} = \begin{bmatrix} \mathbf{j}^0_{1 \times 2K-1} \\ \vdots \\ \mathbf{j}^{N-1}_{1 \times 2K-1} \end{bmatrix}$$

- $\hat{\mathbf{C}}^{\mathbf{E}}_{N \times (2K-1)}$ le bloc filtré ;
- $C_{N \times (2K-1)} = [\tilde{C}_{n,l}]_{n=0,..,N-1}$ *et l*=0,...2*K*-1
- $\hat{C}_{N \times K} = [\hat{C}_{n,k}]_{n=0,u,N-1}$ *et k*=0,..,*K*-1
- *n* un entier allant de 0 à *N-1,*
- *k* un entier allant de 0 à *K-1,*
- * l'opérateur conjugué,
- ⊙ le produit de Hadamard,
- $\mathbf{j}^n_{1 \times (2K-1)}$ un vecteur dont tous les éléments sont égaux à $\left(\sqrt{-1}\right)^n$, sauf l'élément de même indice que la colonne de référence qui est égal 1.

Selon une caractéristique particulière de l'invention, pour construire chaque *(n+1)*-ième ligne du bloc démappé, l'étape de mappage met en œuvre une extraction de *(2K-1)* échantillons fréquentiels parmi les *MK* échantillons fréquentiels, à partir du $([(m+n)K - (K-1)] mod\ MK) + 1$ -ième échantillon fréquentiel, avec *m* l'indice de la première porteuse allouée à un utilisateur.

Selon une autre caractéristique particulière de l'invention, l'étape de filtrage met en œuvre un filtre de longueur 2*K* - 1, tel que la valeur du coefficient du filtre de même indice que la colonne de référence, dit coefficient de référence, est égale à 1 et les valeurs des autres coefficients du filtre sont symétriques par rapport au coefficient de référence.

En particulier, un tel filtre peut être identique à celui utilisé côté modulation.

Dans un autre mode de réalisation, l'invention concerne un dispositif de démodulation d'un signal à porteuses multiples, délivrant au moins un bloc de symboles complexes reconstruits, comprenant les modules suivants :

- un module de transformation du signal à porteuses multiples du domaine temporel vers le domaine fréquentiel, délivrant *MK* échantillons fréquentiels, avec *M* et *K* des entiers tels que *M* > 1 et *K* ≥ 1,
- un module de mappage des *MK* échantillons fréquentiels sur un bloc de *N*×(2*K* - 1) éléments, avec *N* un entier tel

que $M \geq N > 1$, dit bloc démappé,

- un module de filtrage du bloc démappé, délivrant un bloc de $N \times (2K - 1)$ éléments filtrés, dit bloc filtré,
- un module de déphasage du bloc filtré, délivrant un bloc filtré déphasé ;
- un module de reconstruction d'un bloc de base à partir du bloc filtré déphasé, délivrant un bloc de $NxK$ symboles complexes reconstruits, dit bloc reconstruit, mettant en œuvre :

   ∘ si $K$ est impair : des moyens d'identification d'une colonne de référence de $N$ premiers éléments dans le bloc filtré déphasé, délivrant $N$ premiers symboles complexes reconstruits, et, pour les $N \times (2K - 1) - N$ éléments restants du bloc filtré déphasé, des moyens de sommation deux à deux d'un élément d'une ligne du bloc filtré déphasé avec le conjugué d'un autre élément de la même ligne, délivrant $\frac{N \times (2K-1) - N}{2}$ symboles complexes reconstruits,

   ∘ si $K$ est pair : des moyens d'identification d'une colonne de référence de $N$ premiers éléments dans le bloc filtré déphasé, délivrant $N$ premiers symboles complexes reconstruits ; pour $2N$ deuxièmes éléments du bloc filtré déphasé, des moyens de sommation deux à deux des parties réelles des $2N$ deuxièmes éléments, délivrant $N$ deuxièmes symboles complexes reconstruits; et pour les $N \times (2K - 1) - 3N$ éléments restants du bloc filtré déphasé, des moyens de sommation deux à deux d'un élément d'une ligne du bloc filtré déphasé avec le conjugué d'un autre élément de la même ligne, délivrant $\frac{N \times (2K-1) - 3N}{2}$ symboles complexes reconstruits.

Un tel dispositif de démodulation est notamment adapté à mettre en œuvre le procédé de démodulation décrit précédemment. Il s'agit par exemple d'une station de base d'un réseau cellulaire pour une communication sur voie montante, ou d'un terminal de type ordinateur, téléphone, tablette, boîtier décodeur, etc., pour une communication sur voie descendante. Ce dispositif pourra bien sûr comporter les différentes caractéristiques relatives au procédé de démodulation selon l'invention, qui peuvent être combinées ou prises isolément. Ainsi, les caractéristiques et avantages de ce dispositif sont les mêmes que ceux du procédé décrit précédemment. Par conséquent, ils ne sont pas détaillés plus amplement.

L'invention concerne encore un ou plusieurs programmes d'ordinateur comportant des instructions pour la mise en œuvre d'un procédé de modulation tel que décrit ci-dessus lorsque ce ou ces programmes sont exécutés par un processeur, et un ou plusieurs programmes d'ordinateur comportant des instructions pour la mise en œuvre d'un procédé de démodulation tel que décrit ci-dessus lorsque ce ou ces programmes sont exécutés par un processeur.

Les procédés selon l'invention peuvent donc être mis en œuvre de diverses manières, notamment sous forme câblée et/ou sous forme logicielle.

L'invention concerne aussi un ou plusieurs supports d'informations lisibles par un ordinateur, et comportant des instructions d'un ou plusieurs programmes d'ordinateur tels que mentionné ci-dessus.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1 présente les principales étapes mises en œuvre par la technique de modulation selon un mode de réalisation particulier de l'invention ;
- la figure 2 illustre les principales étapes mises en œuvre par la technique de démodulation selon un mode de réalisation particulier de l'invention ;
- les figures 3 et 4 illustrent respectivement la structure simplifiée d'un modulateur mettant en œuvre une technique de modulation, et un démodulateur mettant en œuvre une technique de démodulation selon un mode de réalisation particulier de l'invention.

## 5. Description d'un mode de réalisation de l'invention

Le principe général de l'invention repose sur une nouvelle technique de modulation sur un multiplex de porteuses, mettant en œuvre une extension d'au moins un bloc de symboles complexes à moduler, délivrant un bloc étendu définissant un motif spécifique des symboles, et sur une nouvelle technique de démodulation correspondante.

L'utilisation d'un tel motif spécifique de symboles permet en effet d'utiliser des symboles à valeurs complexes en entrée du modulateur et de satisfaire la condition de reconstruction parfaite des symboles ($C_{N \times K} = \hat{C}_{N \times K}$).

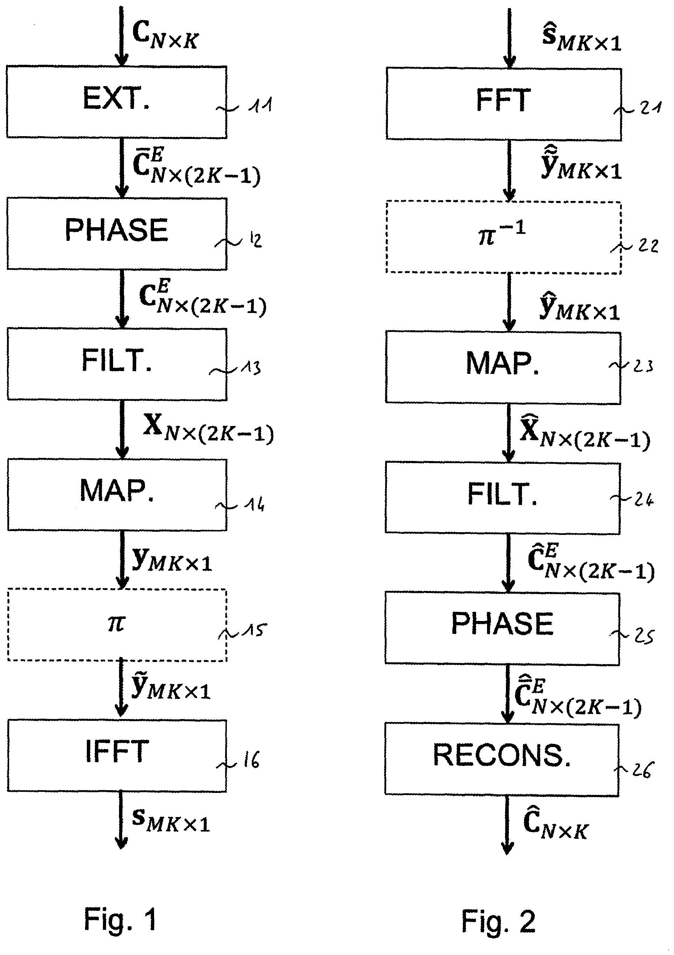

On présente ci-après, en relation avec la figure 1, les principales étapes mises en œuvre par un procédé de modulation selon un mode de réalisation de l'invention.

Un tel procédé reçoit en entrée au moins un bloc de base de *NxK* symboles complexes, noté $C_{N \times K}$, avec N > 1 et $K \geq 1$, que l'on souhaite moduler.

$$\mathbf{C}_{N \times K} = \begin{bmatrix} C_{0,0} & \cdots & C_{0,K-1} \\ \vdots & \ddots & \vdots \\ C_{N-1,0} & \cdots & C_{N-1,K-1} \end{bmatrix}.$$

On note

Chaque symbole complexe est noté $C_{n,k}$, avec *k* l'indice du symbole complexe dans l'intervalle temporel (en anglais « symbol duration », i.e. de la colonne du bloc), $0 \leq k \leq K - 1$, et n l'indice de la sous-porteuse (i.e. de la ligne du bloc), $0 \leq n \leq N - 1$. On note qu'un symbole complexe peut être un symbole de données, portant éventuellement une valeur nulle, ou un pilote.

On note par ailleurs *M* le nombre total de porteuses disponibles, avec $M \geq N$ et *M* un entier pair.

Si l'on considère un système de communication cellulaire mettant en œuvre plusieurs utilisateurs, on a *N < M*, avec *N* le nombre de porteuses allouées à un utilisateur. Par exemple, *N* est un multiple de 12.

Au cours d'une première étape 11, le bloc de base $C_{N \times K}$ est étendu, de façon à obtenir un bloc étendu $\bar{C}^E_{N \times (K-1)}$ comprenant $N \times (2K - 1)$ éléments. On augmente donc le nombre de colonnes par rapport au nombre de colonnes du bloc de base.

Les éléments formant le bloc étendu sont obtenus à partir des symboles complexes du bloc de base. Chaque élément du bloc étendu correspond soit à un symbole complexe du bloc de base, soit au conjugué d'un symbole complexe du bloc de base, soit à la partie réelle ou imaginaire d'un symbole complexe du bloc de base (éventuellement multipliée par un facteur $\sqrt{2}$).

Ainsi, si *K* est impair, le bloc étendu $\bar{C}^E_{N \times (K-1)}$ comprend une colonne comprenant *N* éléments correspondant à *N* premiers symboles complexes choisis aléatoirement dans le bloc de base, dite colonne de référence, et $2K - 2$ colonnes comprenant $N(2K - 2)$ éléments, dont $N(K - 1)$ éléments correspondant aux $NK - N$ symboles complexes restants du bloc de base et $N(K - 1)$ éléments correspondant aux conjugués des $NK - N$ symboles complexes restants du bloc de base.

Si *K* est pair, le bloc étendu $\bar{C}^E_{N \times (K-1)}$ comprend une colonne comprenant *N* éléments correspondant à *N* premiers symboles complexes choisis aléatoirement dans le bloc de base, dite colonne de référence, deux colonnes comprenant $2N$ éléments, dont *N* éléments correspondant à la partie réelle de *N* deuxièmes symboles complexes dudit bloc de base, distincts des *N* premiers complexes, et *N* éléments correspondant à la partie imaginaire des *N* deuxièmes symboles complexes, et $2K - 4$ colonnes comprenant $N(2K - 4)$ éléments, dont $N(K - 2)$ éléments correspondant aux $NK - 2N$ symboles complexes restants du bloc de base et $N(K - 2)$ éléments correspondant aux conjugués des $NK - 2N$ symboles complexes restants du bloc de base.

Selon un mode de réalisation particulier de l'invention, la colonne de référence est la colonne centrale du bloc étendu. Il est également possible d'effectuer une permutation des colonnes (et/ou des lignes), de sorte que la colonne de référence ne correspond pas à la colonne centrale du bloc étendu.

A titres d'exemples, avec la colonne de référence comme colonne centrale :

- si *N* est égal à 3 et *K* est égal à 2, le bloc de base :

| | |
|---|---|
| *a*1 | *b*1 |
| *a*2 | *b*2 |
| *a*3 | *b*3 |

peut être étendu sous la forme suivante :

| | | |
|---|---|---|
| *Im*(*a*2) | *a*1 | *Im*(*b*1) |
| *Im*(*a*3) | *b*3 | *Re*(*a*2) |

(suite)

| Re(a3) | b2 | Re(b1) |
|---|---|---|

- si N est égal à 3 et *K* est égal à 3, le bloc de base :

| a1 | b1 | c1 |
|---|---|---|
| a2 | b2 | c2 |
| a3 | b3 | c3 |

peut être étendu sous la forme suivante :

| a1 | a1* | a2 | a3 | a3* |
|---|---|---|---|---|
| b1 | b1* | b2 | c2* | c2 |
| b3* | b3 | c1 | c3 | c3* |

- si N est égal à 3 et K est égal à 4, le bloc de base :

| a1 | b1 | c1 | d1 |
|---|---|---|---|
| a2 | b2 | c2 | d2 |
| a3 | b3 | c3 | d3 |

peut être étendu sous la forme suivante :

| b1 | Re(b2) | b1* | a1 | a3* | Re(c2) | a3 |
|---|---|---|---|---|---|---|
| a2 | Im(b2) | a2* | b3 | d2 | Re(c3) | d2* |
| c1* | Im(c2) | c1 | d1 | d3 | Im(c3) | d3* |

- si *N* est égal à 3 et *K* est égal à 5, le bloc de base :

| a1 | b1 | c1 | d1 | e1 |
|---|---|---|---|---|
| a2 | b2 | c2 | d2 | e2 |
| a3 | b3 | c3 | d3 | e3 |

peut être étendu sous la forme suivante :

| b1 | a2* | a2 | b1* | b2 | d2 | b3 | b3* | d2* |
|---|---|---|---|---|---|---|---|---|
| a1* | d3* | d3 | a1 | a3 | c1 | c2* | c2 | c1* |
| c3* | d1 | d1* | c3 | e2 | e1* | e3* | e3 | e1 |

- etc.

De manière plus générale, le bloc étendu $\bar{\mathbf{C}}^E_{N \times (K-1)}$ peut être obtenu à partir des équations suivantes :

- si *K* est pair :

$$\bar{\mathbf{C}}_{N\times 2K-1}^{E} = \begin{cases} \bar{C}_{n,k}^{E} = (\bar{C}_{n,K-k}^{E})^{*} = C_{n,k}, k \in [0,(K/2)-2] \\ \bar{C}_{n,(K/2)-1}^{E} = \sqrt{2}\Re\{C_{n,(K/2)-1}\} \\ \bar{C}_{n,(K/2)-1+K}^{E} = \sqrt{2}\Im\{C_{n,(K/2)-1}\} \\ \bar{C}_{n,K-1}^{E} = C_{n,K/2} \\ \bar{C}_{n,k+K}^{E} = (\bar{C}_{n,2K-1-k}^{E})^{*} = C_{n,k+K/2+1}, k \in [0,(K/2)-2] \end{cases}$$

- si $K$ est impair :

$$\bar{\mathbf{C}}_{N\times 2K-1}^{E} = \begin{cases} \bar{C}_{n,k}^{E} = (\bar{C}_{n,K-k}^{E})^{*} = C_{n,k}, k \in [0,(K-1)/2-1] \\ \bar{C}_{n,K-1}^{E} = C_{n,(K-1)/2} \\ \bar{C}_{n,k+K}^{E} = (\bar{C}_{n,2K-1-k}^{E})^{*} = C_{n,k+(K-1)/2+1}, k \in [0,(K-1)/2-1] \end{cases}$$

On note que la multiplication par le terme en $\sqrt{2}$ pour les parties réelle et imaginaire permet de normaliser l'amplitude des symboles sur les différentes colonnes.

Au cours d'une deuxième étape 12, le bloc étendu $\bar{\mathbf{C}}_{N\times(K-1)}^{E}$ est déphasé, en appliquant un déphasage différent ligne par ligne. Un tel déphasage met par exemple en œuvre une multiplication de tous éléments d'une ligne du bloc étendu par une valeur égale à $\left(\sqrt{-1}\right)^{n}$, avec $n$ l'indice de la ligne allant de 0 à $N-1$, à l'exception de l'élément correspondant à la colonne de référence. Le bloc obtenu est un bloc étendu déphasé, noté $\mathbf{C}_{N\times(2K-1)}^{E}$.

Par exemple, si on note $J_{N\times(2K-1)}$ la matrice de permutation de phase, définie par :

$$\mathbf{J}_{N\times 2K-1} = \begin{bmatrix} \mathbf{j}_{1\times 2K-1}^{0} \\ \vdots \\ \mathbf{j}_{1\times 2K-1}^{N-1} \end{bmatrix}$$

où $\mathbf{j}_{1\times(2K-1)}^{n}$ un vecteur dont tous les éléments sont égaux à $\left(\sqrt{-1}\right)^{n}$, sauf l'élément de même indice que la colonne de référence qui est égal 1.

Ainsi, si la colonne de référence est la première colonne du bloc étendu (suite à une permutation des colonnes par exemple), $\mathbf{j}_{1\times(2K-1)}^{n}$ est un vecteur tel que le premier élément est égal à 1 et tous les autres éléments sont égaux à $\left(\sqrt{-1}\right)^{n}$. Si la colonne de référence est la colonne centrale du bloc étendu, $\mathbf{j}_{1\times(2K-1)}^{n}$ est un vecteur tel que l'élément central est égal à 1 et tous les autres éléments sont égaux à $\left(\sqrt{-1}\right)^{n}$.

Le bloc étendu déphasé peut alors être obtenu à partir des équations suivantes :

$$\mathbf{C}_{N\times(2K-1)}^{E} = \mathbf{J}_{N\times(2K-1)} \odot \bar{\mathbf{C}}_{N\times(2K-1)}^{E}$$

où $\odot$ est l'opérateur correspondant au produit de Hadamard.

En reprenant l'exemple précédent proposé pour $K = 4$, le bloc étendu déphasé peut s'écrire sous la forme suivante :

| $b1$ | $Re(b2)$ | $b1^*$ | $a1$ | $a3^*$ | $Re(c2)$ | $a3$ |
|------|----------|--------|------|--------|----------|------|
| $\sqrt{-1}a2$ | $\sqrt{-1}Im(b2)$ | $\sqrt{-1}a2^*$ | $b3$ | $\sqrt{-1}d2$ | $\sqrt{-1}Re(c3)$ | $\sqrt{-1}d2^*$ |

(suite)

| -c1* | -Im(c2) | -c1 | d1 | -d3 | -Im(c3) | -d3* |
|------|---------|-----|----|-----|---------|------|

Au cours d'une troisième étape 13, le bloc étendu déphasé $\mathbf{C}^{\mathrm{E}}_{\mathrm{N}\times(2K-1)}$ est filtré, délivrant un bloc filtré $\mathrm{X}_{N\times(2K-1)}$ de $N\times(2K-1)$ éléments filtrés. Un tel filtrage met par exemple en œuvre un filtre de longueur $2K-1$, tel que la valeur du coefficient du filtre de même indice que la colonne de référence, dit coefficient de référence, soit égale à 1, et les valeurs des autres coefficients du filtre soient symétriques par rapport au coefficient de référence.

Par exemple, on note $\mathbf{H}^f_{N\times(2K-1)}$ la matrice de filtrage, définie par :

$$\mathbf{H}^f_{N\times(2K-1)} = \mathbf{1}_{N\times1}\mathbf{h}^f_{1\times(2K-1)}$$

où $\mathbf{1}_{N\times1}$ est un vecteur colonne formé d'éléments égaux à 1 et $\mathbf{h}^f_{1\times(2K-1)}$ un vecteur de filtrage formé des coefficients du filtre, à valeurs réelles.

Si la colonne de référence est la première colonne du bloc étendu (suite à une permutation des colonnes par exemple), $\mathbf{h}^f_{1\times(2K-1)}$ est un vecteur tel que $\mathbf{h}^f_{1\times(2K-1)} = [h^f_0, h^f_1, ..., h^f_{2K-2}, h^f_{2K-1}]$ dans lequel le premier élément $h^f_0$ est égal à 1 et tous les autres éléments sont inférieurs à $1$ ($h^f_0 > h^f_1 > \cdots > h^f_{2K-2} > h^f_{2K-1}$). Si la colonne de référence est la deuxième colonne du bloc étendu (suite à une permutation des colonnes par exemple), $\mathbf{h}^f_{1\times(2K-1)}$ est un vecteur tel que $\mathbf{h}^f_{1\times(2K-1)} = [h^f_1, h^f_0, h^f_1, ..., h^f_{2K-2}]$ dans lequel le deuxième élément $h^f_0$ est égal à 1 et tous les autres éléments sont inférieurs à 1 et symétriques par rapport au deuxième élément $h^f_0$. Si la colonne de référence est la colonne centrale du bloc étendu, $\mathbf{h}^f_{1\times(2K-1)}$ est un vecteur tel que $\mathbf{h}^f_{1\times(2K-1)} = [h^f_{K-1}, h^f_{K-2}, ..., h^f_1, h^f_0, h^f_1, ..., h^f_{K-2}, h^f_{K-1}]$ dans lequel l'élément central $h^f_0$ est égal à 1 et tous les autres éléments sont symétriques par rapport à l'élément central (et $h^f_0 > h^f_1 > \cdots > h^f_{K-2} > h^f_{K-1}$.

En particulier, les coefficients $h^f_k$ du filtre peuvent être calculés de façon à respecter le critère Nyquist, tel que :

$$h^f_k = \begin{cases} (h^f_0)^2 = 1 \\ (h^f_k)^2 + (h^f_{K-k})^2 = 1 \end{cases}, \text{ pour } k \in [1, K-1]$$

Le bloc filtré peut alors être obtenu à partir des équations suivantes :

$$\mathbf{X}_{N\times(2K-1)} = \mathbf{H}^f_{N\times(2K-1)} \odot \mathbf{C}^E_{N\times(2K-1)}$$

En reprenant l'exemple précédent proposé pour $K=4$, et en considérant le vecteur de filtrage $\mathbf{h}^f_{1\times7} = [h^f_3, h^f_2, h^f_1, h^f_0, h^f_1, h^f_2, h^f_3]$, le bloc filtré peut s'écrire sous la forme suivante :

| $b1.h_3^f$ | $Re(b2).h_2^f$ | $b1^*.h_1^f$ | $a1.h_0^f$ | $a3^*.h_1^f$ | $Re(c2).h_2^f$ | $a3.h_3^f$ |
|---|---|---|---|---|---|---|
| $\sqrt{-1}a2.h_3^f$ | $\sqrt{-1}Im(b2).h_2^f$ | $\sqrt{-1}a2^*.h_1^f$ | $b3.h_0^f$ | $\sqrt{-1}d2.h_1^f$ | $\sqrt{-1}Re(c3).h_2^f$ | $\sqrt{-1}d2^*.h_3^f$ |
| $-c1^*.h_3^f$ | $-Im(c2).h_2^f$ | $-c1.h_1^f$ | $d1.h_0^f$ | $-d3.h_1^f$ | $-Im(c3).h_2^f$ | $-d3^*.h_3^f$ |

Au cours d'une quatrième étape 14, les $N\times(2K-1)$ éléments filtrés du bloc filtré $X_{N\times(2K-1)}$ sont mappés sur $MK$ échantillons fréquentiels.

Par exemple, un tel mappage met en œuvre, pour chaque ligne du bloc filtré, un décalage cyclique de $nK$ positions, modulo $MK$, avec $n$ l'indice de la ligne allant de 0 à $(N-1)$, et une sommation colonne par colonne des éléments obtenus après décalage cyclique.

En reprenant l'exemple ci-dessus pour $N=3$ et $K=4$, et en considérant $M=4$, on obtient le bloc suivant après décalage cyclique de $nK$ positions, modulo $MK$ :

| Col0 | Col1 | Col2 | Col3 | Col4 | Col5 | Col6 | Col7 |
|---|---|---|---|---|---|---|---|
| $b1.h_3^f$ | $Re(b2).h_2^f$ | $b1^*.h_1^f$ | $a1.h_0^f$ | $a3^*.h_1^f$ | $Re(c2).h_2^f$ | $a3.h_3^f$ | |
| | | | | $\sqrt{-1}a2.h_3^f$ | $\sqrt{-1}Im(b2).h_2^f$ | $\sqrt{-1}a2^*.h_1^f$ | $b3.h_0^f$ |
| | | | | | | | |

| Col8 | Col9 | Col10 | Col11 | Col12 | Col13 | Col14 | Col15 |
|---|---|---|---|---|---|---|---|
| | | | | | | | |
| $\sqrt{-1}d2.h_1^f$ | $\sqrt{-1}Re(c3).h_2^f$ | $\sqrt{-1}d2^*.h_3^f$ | | | | | |
| $-c1^*.h_3^f$ | $-Im(c2).h_2^f$ | $-c1.h_1^f$ | $d1.h_0^f$ | $-d3.h_1^f$ | $-Im(c3).h_2^f$ | $-d3^*.h_3^f$ | |

On obtient ensuite le vecteur ligne suivant après sommation colonne par colonne :

| Col0 | Col1 | Col2 | Col3 | Col4 | Col5 | Col6 | Col7 |
|---|---|---|---|---|---|---|---|
| $b1.h_3^f$ | $Re(b2).h_2^f$ | $b1^*.h_1^f$ | $a1.h_0^f$ | $a3^*.h_1^f$ $+ \sqrt{-1}a2.h_3^f$ | $Re(c2).h_2^f$ $+ \sqrt{-1}Im(b2).h_2^f$ | $a3.h_3^f$ $+ \sqrt{-1}a2^*.h_1^f$ | $b3.h_0^f$ |

| Col8 | Col9 | Col10 | Col11 | Col12 | Col13 | Col14 | Col15 |
|---|---|---|---|---|---|---|---|
| $\sqrt{-1}d2.h_1^f$ $-c1^*.h_3^f$ | $\sqrt{-1}Re(c3).h_2^f$ $- Im(c2).h_2^f$ | $\sqrt{-1}d2^*.h_3^f$ $- c1.h_1^f$ | $d1.h_0^f$ | $-d3.h_1^f$ | $-Im(c3).h_2^f$ | $-d3^*.h_3^f$ | |

De manière plus générale, le mappage met en œuvre, pour chaque ligne du bloc filtré, un décalage cyclique modulo $MK$, permettant d'amener l'élément appartenant à la colonne de référence en $([(n+m)K \bmod MK]+1)$-ième position, avec m l'indice de la première porteuse allouée à un utilisateur donné, avec m allant de 0 à $M-N-1$, et n l'indice de la ligne allant de 0 à $(N-1)$, et une sommation colonne par colonne des éléments obtenus après décalage cyclique.

En reprenant l'exemple ci-dessus avec $N=3$ et $M=K=4$, et en supposant $m=0$, le décalage cyclique modulo $MK$ permettant d'amener l'élément appartenant à la colonne de référence en $([(n+m)K]+1)$-ième position délivre le bloc suivant :

| Col0 | Col1 | Col2 | Col3 | Col4 | Col5 | Col6 | Col7 |
|---|---|---|---|---|---|---|---|
| $a1.h_0^f$ | $a3^*.h_1^f$ | $Re(c2).h_2^f$ | $a3.h_3^f$ | | | | |
| | $\sqrt{-1}a2.h_3^f$ | $\sqrt{-1}Im(b2).h_2^f$ | $\sqrt{-1}a2^*.h_1^f$ | $b3.h_0^f$ | $\sqrt{-1}d2.h_1^f$ | $\sqrt{-1}Re(c3).h_2^f$ | $\sqrt{-1}d2^*.h_3^f$ |
| | | | | | $-c1^*.h_3^f$ | $-Im(c2).h_2^f$ | $-c1.h_1^f$ |

| Col8 | Col9 | Col10 | Col11 | Col12 | Col13 | Col14 | Col15 |
|---|---|---|---|---|---|---|---|
| | | | | | $b1.h_3^f$ | $Re(b2).h_2^f$ | $b1^*.h_1^f$ |
| | | | | | | | |
| $d1.h_0^f$ | $-d3.h_1^f$ | $-Im(c3).h_2^f$ | $-d3^*.h_3^f$ | | | | |

On obtient ensuite le vecteur ligne suivant après sommation colonne par colonne :

| Col0 | Col1 | Col2 | Col3 | Col4 | Col5 | Col6 |
|---|---|---|---|---|---|---|
| $a1.h_0^f$ | $a3^*.h_1^f$ $+ \sqrt{-1}a2.h_3^f$ | $Re(c2).h_2^f$ $+ \sqrt{-1}Im(b2).h_2^f$ | $a3.h_3^f$ $+ \sqrt{-1}a2^*.h_1^f$ | $b3.h_0^f$ | $\sqrt{-1}d2.h_1^f$ $- c1^*.h_3^f$ | $\sqrt{-1}Re(c3).h_2^f$ $- Im(c2).h_2^f$ |

| Col7 | Col8 | Col9 | Col10 | Col11 | Col12 | Col13 | Col14 | Col15 |
|---|---|---|---|---|---|---|---|---|
| $\sqrt{-1}d2^*.h_3^f$ $- c1.h_1^f$ | $d1.h_0^f$ | $-d3.h_1^f$ | $-Im(c3).h_2^f$ | $-d3^*.h_3^f$ | | $b1.h_3^f$ | $Re(b2).h_2^f$ | $b1^*.h_1^f$ |

Ce vecteur de *MK* échantillons fréquentiels peut être présenté sous la forme d'un vecteur colonne, dans lequel chaque élément correspond à une entrée d'un module de transformation du domaine fréquentiel vers le domaine temporel.

Si l'on reprend l'expression générique du bloc filtré, $X_{N \times (2K-1)}$, l'étape de mappage vise à mapper chaque ligne $\mathbf{x}_{1 \times (2K-1)}^n$ du bloc filtré aux *MK* entrées d'un module de transformation du domaine fréquentiel vers le domaine temporel. On obtient en sortie de l'étape de mappage un vecteur colonne de taille *MK*, noté $y_{MK \times 1}$, qui peut être défini par les équations suivantes :

$$\mathbf{y}_{MK \times 1} = \sum_{n=0}^{N-1} \mathbf{y}_{MK \times 1}^n$$

$$\mathbf{y}_{MK \times 1}^n = \left(\mathbf{x}_{1 \times 2K-1}^n \mathbf{G}_{2K-1 \times MK}^n\right)^T$$

$$\mathbf{G}^{n}_{2K-1\times MK} = \begin{bmatrix} \mathbf{0}_{(m+n)K-K+1\times 2K-1} \\ \mathbf{I}_{2K-1} \\ \mathbf{0}_{(M-m-n-1)K\times 2K-1} \end{bmatrix}^{T} , \text{pour } n \neq 0$$

$$\mathbf{G}^{0}_{2K-1\times MK} = \begin{bmatrix} \left( \mathbf{0}_{K\times K-1} \quad \mathbf{I}_{K} \right) \\ \mathbf{0}_{MK-2K+1\times 2K-1} \\ \left( \mathbf{I}_{K-1} \quad \mathbf{0}_{K-1,K} \right) \end{bmatrix}^{T} , \text{pour } m = n = 0$$

où $\mathbf{I}_{2K-1}$ est la matrice unité de taille $(2K - 1)\times(2K - 1)$ et $(.)^T$ l'opérateur transposé.

Au cours d'une cinquième étape 15, facultative, on peut entrelacer les échantillons fréquentiels non nuls et non obtenus à partir de pilotes. Dans l'exemple présenté, on considère uniquement des symboles complexes de type symboles de données. On peut donc changer l'ordre des $NxK + K - 1 = 15$ échantillons fréquentiels non nuls. Par exemple, à l'issue de l'étape facultative d'entrelacement 15, on obtient le vecteur $(\tilde{y}_{MK\times 1})^{T}$ suivant :

| Col0 | Col1 | Col2 | | Col3 | Col4 | Col5 | Col6 | |
|---|---|---|---|---|---|---|---|---|
| $a1.h_0^f$ | $-d3^*.h_3^f$ | $Re(c2).h_2^f$ $+ \sqrt{-1}Im(b2).h_2^f$ | | $a3.h_3^f + \sqrt{-1}a2^*.h_1^f$ | $b3.h_0^f$ | $b1^*.h_1^f$ | $\sqrt{-1}Re(c3).h_2^f$ $- Im(c2).h_2^f$ | |

| Col7 | Col8 | Col9 | Col10 | Col11 | Col12 | Col13 | Col14 | Col15 |
|---|---|---|---|---|---|---|---|---|
| $\sqrt{-1}d2^*.h_3^f$ $- c1.h_1^f$ | $a3^*.h_1^f$ $+ \sqrt{-1}a2.h_3^f$ | $-d3.h_1^f$ | $-Im(c3).h_2^f$ | $d1.h_0^f$ | | $b1.h_3^f$ | $Re(b2).h_2^f$ | $\sqrt{-1}d2.h_1^f$ $- c1^*.h_3^f$ |

Finalement, au cours d'une sixième étape 16, les $MK$ échantillons fréquentiels, éventuellement entrelacés, sont transformés du domaine fréquentiel vers le domaine temporel, en utilisant une transformation classique, par exemple une transformée de Fourier inverse. On obtient ainsi un vecteur colonne de taille $MK$, noté $s_{MK\times 1}$, comprenant les échantillons temporels du signal à porteuses multiples.

Par exemple, un tel signal est obtenu à partir de l'équation suivante :

$$\mathbf{s}_{MK\times 1} = \mathbf{F}^{H}_{MK\times MK}\cdot\tilde{\mathbf{y}}_{MK\times 1}$$

(ou $\mathbf{s}_{MK\times 1} = \mathbf{F}^{H}_{MK\times MK}\cdot\mathbf{y}_{MK\times 1}$ si on ne met pas en œuvre d'entrelacement) où $\mathbf{F}^{H}_{MK\times MK}$ est une matrice représentative d'une transformée de Fourier inverse, avec $(.)^H$ l'opérateur transposé conjugué.

Comme indiqué ci-dessus, le nombre de porteuses disponibles ($M$) peut être supérieur ou égal au nombre de porteuses allouées à un utilisateur ($N$).

Ainsi, dans le système LTE par exemple, seules 300 porteuses sont utilisées pour transmettre les données utiles, parmi les 512 porteuses disponibles. Ces 300 porteuses sont en outre groupées en 25 groupes de 12 porteuses chacun, encore appelés « chunks ». Des chunks différents peuvent être alloués à différents utilisateurs.

Selon la technique de modulation proposée, si deux chunk adjacents sont attribués à des utilisateurs différents dans le cas où $M > N$, leurs données peuvent se chevaucher, ce qui risque de provoquer des interférences.

Pour résoudre ce problème, on peut affecter une valeur nulle au premier élément de chaque colonne du bloc étendu précédent la colonne de référence, ou bien une valeur nulle au dernier élément de chaque colonne du bloc étendu suivant la colonne de référence.

De cette façon, on place des symboles nuls sur la dernière ou la première porteuse d'un chunk.

Par exemple, pour un bloc de base $\mathbf{C}_{N\times K}$, avec $N$ le nombre de porteuses allouées à un utilisateur (par exemple une valeur multiple de 12), et en reprenant les équations définies précédemment pour le bloc étendu $\bar{\mathbf{C}}^{E}_{N\times(K-1)}$, on

doit définir des symboles nuls sur la dernière (ou la première) porteuse, de sorte que :

Pour

$$K \text{ pair:} \begin{cases} C_{N-1,K/2-1} = \Re\{C_{N-1,K/2-1}\} \\ C_{N-1,K/2+1\cdots K-1} = 0. \end{cases}$$

Pour $K$ impair: $C_{N,(K-1)/2+1\cdots K-1}=0$.

En particulier, si les colonnes du bloc de base ont été permutées aléatoirement avant l'étape d'extension, les équations ci-dessus doivent être adaptées pour tenir compte de cette permutation.

De cette façon, l'utilisateur est isolé d'un autre utilisateur qui accède à la sous-bande adjacente.

En particulier, l'énergie économisée par la transmission de symboles nuls peut être mise à profit pour stimuler le reste des symboles non nuls, par exemple en augmentant l'ordre de la constellation ou le rendement de codage.

On présente désormais, en relation avec la figure 2, les principales étapes mises en œuvre par un procédé de démodulation d'un signal à porteuses multiples selon un mode de réalisation de l'invention, permettant de reconstruire au moins un bloc de symboles complexes. En particulier, un tel signal à porteuses multiples est généré selon le procédé décrit ci-dessus. La démodulation met donc en œuvre des opérations duales de celles mises en œuvre pour la génération du signal à porteuses multiples.

Au cours d'une première étape 21, on reçoit $MK$ échantillons temporels $s[k]$, avec $k$ allant de 0 à $MK\text{-}1,$ et $M$ et $K$ des entiers tels que $M > 1$ et $K \geq 1$. Le vecteur $\hat{s}_{MK\times1}$ formé des $MK$ échantillons temporels est transformé du domaine temporel vers le domaine fréquentiel, en utilisant par exemple une transformation classique telle qu'une transformée de Fourier.

On obtient ainsi un vecteur colonne de taille $MK,$ noté par exemple $\hat{\hat{y}}_{MK\times1}$ si un entrelacement a été mis en œuvre côté modulation, comprenant $MK$ échantillons fréquentiels entrelacés.

En reprenant l'exemple présenté ci-dessus en relation avec la modulation, on a par exemple $\left(\hat{\hat{y}}_{MK\times1}\right)^T$ défini par :

| Col0 | Col1 | Col2 | Col3 | Col4 | Col5 | Col6 |
|---|---|---|---|---|---|---|
| $a1.h_0^f$ | $-d3^*.h_3^f$ | $Re(c2).h_2^f + \sqrt{-1}Im(b2).h_2^f$ | $a3.h_3^f + \sqrt{-1}a2^*.h_1^f$ | $b3.h_0^f$ | $b1^*.h_1^f$ | $\sqrt{-1}Re(c3).h_2^f - Im(c2).h_2^f$ |

| Col7 | Col8 | Col9 | Col10 | Col11 | Col12 | Col13 | Col14 | Col15 |
|---|---|---|---|---|---|---|---|---|
| $\sqrt{-1}d2^*.h_3^f - c1.h_1^f$ | $a3^*.h_1^f + \sqrt{-1}a2.h_3^f$ | $-d3.h_1^f$ | $-Im(c3).h_2^f$ | $d1.h_0^f$ | | $b1.h_3^f$ | $Re(b2).h$ | $\sqrt{-1}d2.h_1^f - c1^*.h_3^f$ |

De manière générale, un tel signal est obtenu à partir de l'équation suivante :

$$\hat{\hat{y}}_{MK\times1} = F_{MK\times MK}\cdot\hat{s}_{MK\times1}$$

(ou $\hat{y}_{MK\times1} = F_{MK\times MK}\hat{s}_{MK\times1}$ si on n'a pas mis en œuvre un entrelacement côté modulation) où $F_{MK\times MK}$ est une matrice représentative d'une transformée de Fourier.

Si un entrelacement a été mis en œuvre côté modulation, un désentrelacement est mis en œuvre côté démodulation au cours d'une deuxième étape 22, de façon à récupérer les échantillons fréquentiels dans l'ordre. Le vecteur

$(\hat{y}_{MK\times1})^T$ obtenu après désentrelacement peut s'écrire sous la forme suivante :

| Col0 | Col1 | Col2 | Col3 | Col4 | Col5 | Col6 |
|---|---|---|---|---|---|---|
| $a1.h_0^f$ | $a3^*.h_1^f$ $+ \sqrt{-1}a2.h_3^f$ | $Re(c2).h_2^f$ $+ \sqrt{-1}Im(b2).h_2^f$ | $a3.h_3^f$ $+ \sqrt{-1}a2^*.h_1^f$ | $b3.h_0^f$ | $\sqrt{-1}d2.h_1^f$ $- c1^*.h_3^f$ | $\sqrt{-1}Re(c3).h_2^f$ $- Im(c2).h_2^f$ |

| Col7 | Col8 | Col9 | Col10 | Col11 | Col12 | Col13 | Col14 | Col15 |
|---|---|---|---|---|---|---|---|---|
| $\sqrt{-1}d2^*.h_3^f$ $- c1.h_1^f$ | $d1.h_0^f$ | $-d3.h_1^f$ | $-Im(c3).h_2^f$ | $-d3^*.h_3^f$ | | $b1.h_3^f$ | $Re(b2).h_2^f$ | $b1^*.h_1^f$ |

Au cours d'une troisième étape 23, les *MK* échantillons fréquentiels sont mappés sur un bloc de $N\times(2K - 1)$ éléments, avec *N* un entier tel que $M \geq N > 1$, dit bloc démappé, noté $\hat{X}_{N\times(2K-1)}$.

Par exemple, pour construire chaque *(n+1)-ième* ligne du bloc démappé, l'étape de mappage met en œuvre une extraction de *(2K-1)* échantillons fréquentiels parmi les *MK* échantillons fréquentiels, à partir du $([(m + n)K - (K - 1)]mod\ MK) + 1)$-ième échantillon fréquentiel.

En reprenant l'exemple présenté ci-dessus, la première ligne du bloc démappé est construite à partir des sept échantillons fréquentiels suivants :

| $b1.h_3^f$ | $Re(b2).h_2^f$ | $b1^*.h_1^f$ | $a1.h_0^f$ | $a3^*.h_1^f$ $+ \sqrt{-1}a2.h_3^f$ | $Re(c2).h_2^f$ $+ \sqrt{-1}Im(b2).h_2^f$ | $a3.h_3^f$ $+ \sqrt{-1}a2^*.h_1^f$ |
|---|---|---|---|---|---|---|

la deuxième ligne du bloc démappé est construite à partir des sept échantillons fréquentiels suivants :

| $a3^*.h_1^f$ $+ \sqrt{-1}a2.h_3^f$ | $Re(c2).h_2^f$ $+ \sqrt{-1}Im(b2).h_2^f$ | $a3.h_3^f$ $+ \sqrt{-1}a2^*.h_1^f$ | $b3.h_0^f$ | $\sqrt{-1}d2.h_1^f$ $- c1^*.h_3^f$ | $\sqrt{-1}Re(c3).h_2^f$ $- Im(c2).h_2^f$ | $\sqrt{-1}d2^*.h_3^f$ $- c1.h_1^f$ |
|---|---|---|---|---|---|---|

la troisième ligne du bloc démappé est construite à partir des sept échantillons fréquentiels suivants :

| $\sqrt{-1}d2.h_1^f$ $- c1^*.h_3^f$ | $\sqrt{-1}Re(c3).h_2^f$ $- Im(c2).h_2^f$ | $\sqrt{-1}d2^*.h_3^f$ $- c1.h_1^f$ | $d1.h_0^f$ | $-d3.h_1^f$ | $-Im(c3).h_2^f$ | $-d3^*.h_3^f$ |
|---|---|---|---|---|---|---|

En utilisant une représentation matricielle, chaque ligne $\hat{x}_{1\times(2K-1)}^n$ du bloc démappé $\hat{X}_{N\times(2K-1)}$ peut être obtenue à partir des équations suivantes :

$$\hat{x}_{1\times2K-1}^n = \hat{y}_{MK\times1}^T \left(G_{2K-1\times MK}^n\right)^T$$

$$\hat{X}_{N\times(2K-1)} = \begin{bmatrix} \hat{x}_{1\times(2K-1)}^0 \\ \vdots \\ \hat{x}_{1\times(2K-1)}^{N-1} \end{bmatrix}.$$

avec la matrice G telle que définie côté modulation et

Au cours d'une quatrième étape 24, le bloc démappé $\hat{X}_{N\times(2K-1)}$ ainsi obtenu est filtré, délivrant un bloc filtré

$\widehat{\mathbf{C}}^{E}_{N \times (2K-1)}$ de $N \times (2K - 1)$ éléments filtrés. Par exemple, un tel filtrage met en œuvre un filtre de longueur $2K - 1$, tel que la valeur du coefficient du filtre de même indice que la colonne de référence, dit coefficient de référence, est égale à 1 et les valeurs des autres coefficients du filtre sont symétriques par rapport au coefficient de référence. Un tel filtre est similaire à celui mis en œuvre côté modulation.

Ainsi, en reprenant l'exemple ci-dessus, on considère le bloc démappé défini par les trois lignes présentées ci-dessus, que l'on multiplie par le vecteur de filtrage $\mathbf{h}^{f}_{1 \times 7} = \left[ h^{f}_{3}, h^{f}_{2}, h^{f}_{1}, h^{f}_{0}, h^{f}_{1}, h^{f}_{2}, h^{f}_{3} \right],$ pour obtenir le bloc filtré suivant :

| | | | | | | |
|---|---|---|---|---|---|---|
| $b1.\left(h_3^f\right)^2$ | $Re(b2).\left(h_2^f\right)^2$ | $b1^*.\left(h_1^f\right)^2$ | $a1.1$ | $a3^*.\left(h_1^f\right)^2$ $+\sqrt{-1}a2.h_3^f h_1^f$ | $Re(c2).\left(h_2^f\right)^2$ $+\sqrt{-1}Im(b2).\left(h_2^f\right)^2$ | $a3.\left(h_3^f\right)^2$ $+\sqrt{-1}a2^*.h_1^f h_3^f$ |
| $a3^*.h_1^f h_3^f$ $+\sqrt{-1}a2.\left(h_3^f\right)^2$ | $Re(c2).\left(h_2^f\right)^2$ $+\sqrt{-1}Im(b2).\left(h_2^f\right)^2$ | $a3.h_3^f h_1^f$ $+\sqrt{-1}a2^*.\left(h_1^f\right)^2$ | $b3.1$ | $\sqrt{-1}d2.\left(h_1^f\right)^2$ $-c1^*.h_3^f h_1^f$ | $\sqrt{-1}Re(c3).\left(h_2^f\right)^2$ $-Im(c2).\left(h_2^f\right)^2$ | $\sqrt{-1}d2^*.\left(h_3^f\right)^2$ $-c1.h_1^f h_3^f$ |
| $\sqrt{-1}d2.h_1^f h_3^f$ $-c1^*.\left(h_3^f\right)^2$ | $\sqrt{-1}Re(c3).\left(h_2^f\right)^2$ $-Im(c2).\left(h_2^f\right)^2$ | $\sqrt{-1}d2^*.h_3^f h_1^f$ $-c1.\left(h_1^f\right)^2$ | $d1.1$ | $-d3.\left(h_1^f\right)^2$ | $-Im(c3).\left(h_2^f\right)^2$ | $-d3^*.\left(h_3^f\right)^2$ |

De manière plus générale, le bloc filtré $\hat{\mathbf{C}}^E_{N\times(2K-1)}$ peut être obtenu à partir des équations suivantes :

$$\hat{\mathbf{C}}^E_{N\times(2K-1)} = \mathbf{H}^f_{N\times(2K-1)} \odot \hat{\mathbf{X}}_{N\times(2K-1)}$$

Au cours d'une cinquième étape 25, le bloc filtré est déphasé. Le bloc filtré déphasé obtenu est noté $\hat{\hat{\mathbf{C}}}^E_{N\times(2K+1)}$. Par exemple, un tel déphasage met en œuvre un déphasage ligne par ligne du bloc filtré, mettant en œuvre une multiplication des éléments d'une *(n+1)*-ième ligne du bloc filtré par une valeur égale à $\left(\sqrt{-1}\right)^n$, avec n allant de 0 à *N-1,* à l'exception de l'élément correspondant à la colonne de référence, qui est multiplié par 1. Le déphasage mis en œuvre côté démodulation est similaire au déphasage mis en œuvre côté modulation.

Ainsi, en reprenant l'exemple ci-dessus, le bloc filtré déphasé obtenu après l'opération de déphasage est :

| | | | | | | |
|---|---|---|---|---|---|---|
| $b1.\left(h_3^f\right)^2$ | $Re(b2).\left(h_2^f\right)^2$ | $b1^*.\left(h_1^f\right)^2$ | $a1$ | $a3^*.\left(h_1^f\right)^2$ $+\sqrt{-1}a2.h_3^f h_1^f$ | $Re(c2).\left(h_2^f\right)^2$ $+\sqrt{-1}Im(b2).\left(h_2^f\right)^2$ | $a3.\left(h_3^f\right)^2$ $+\sqrt{-1}a2^*.h_1^f h_3^f$ |
| $-ja3^*.h_1^f h_3^f$ $+a2.\left(h_3^f\right)^2$ | $-jRe(c2).\left(h_2^f\right)^2$ $+Im(b2).\left(h_2^f\right)^2$ | $-ja3.h_3^f h_1^f$ $+a2^*.\left(h_1^f\right)^2$ | $b3$ | $d2.\left(h_1^f\right)^2$ $+jc1^*.h_3^f h_1^f$ | $Re(c3).\left(h_2^f\right)^2$ $+jIm(c2).\left(h_2^f\right)^2$ | $d2^*.\left(h_3^f\right)^2$ $+jc1.h_1^f h_3^f$ |
| $-\sqrt{-1}d2.h_1^f h_3^f$ $+c1^*.\left(h_3^f\right)^2$ | $-\sqrt{-1}Re(c3).\left(h_2^f\right)^2$ $+Im(c2).\left(h_2^f\right)^2$ | $-\sqrt{-1}d2^*.h_3^f h_1^f$ $+c1.\left(h_1^f\right)^2$ | $d1$ | $d3.\left(h_1^f\right)^2$ | $Im(c3).\left(h_2^f\right)^2$ | $d3^*.\left(h_3^f\right)^2$ |

De manière plus générale, le bloc filtré déphasé $\hat{\mathbf{C}}^E_{N\times(2K+1)}$ peut être obtenu à partir des équations suivantes :

$$\hat{\mathbf{C}}^E_{N\times(2K+1)} = \mathbf{J}^*_{N\times(2K-1)} \odot \hat{\mathbf{C}}^E_{N\times(2K-1)}$$

où $J_{N\times(2K-1)}$ est la matrice de permutation de phase définie côté modulation.

Au cours d'une sixième étape 26, un bloc $\hat{\mathbf{C}}_{N\times K}$ de NxK symboles complexes est reconstruit ligne par ligne à partir du bloc déphasé $\hat{\mathbf{C}}^E_{N\times(2K+1)}$.

On distingue deux cas selon la valeur de *K*.

Ainsi, si *K* est impair, on identifie une colonne de référence de N premiers éléments dans le bloc filtré déphasé, délivrant *N* premiers symboles complexes reconstruits. Pour les $N\times(2K-1) - N$ éléments restants du bloc filtré déphasé, on somme deux à deux un élément d'une ligne du bloc filtré déphasé avec le conjugué d'un autre élément de la même ligne, de façon à obtenir $\frac{N\times(2K-1)-N}{2}$ symboles complexes reconstruits.

Si *K est* pair, on identifie une colonne de référence de *N* premiers éléments dans le bloc filtré déphasé, délivrant *N* premiers symboles complexes reconstruits. Pour *2N* deuxièmes éléments du bloc filtré déphasé, distincts des *N* premiers éléments, on somme deux à deux les parties réelles des *2N* deuxièmes éléments, de façon à obtenir *N* deuxièmes symboles complexes reconstruits. Finalement, pour les $N\times(2K-1) - 3N$ éléments restants du bloc filtré déphasé, on somme deux à deux un élément d'une ligne du bloc filtré déphasé avec le conjugué d'un autre élément de la ligne, de façon à obtenir $\frac{N\times(2K-1)-3N}{2}$ symboles complexes reconstruits.

On note que la façon de reconstruire le bloc de base n'est pas limitée au mode de réalisation particulier décrit ci-dessus. Par exemple, si *K* est pair, on peut choisir d'identifier une colonne de référence pour obtenir les *N* premiers symboles complexes reconstruits, puis de reconstruire $\frac{N\times(2K-1)-3N}{2}$ en sommant deux à deux des éléments et des éléments conjugués d'une même ligne, puis de reconstruire *N* deuxièmes symboles complexes en sommant deux à deux les parties réelles des *2N* deuxièmes éléments.

En reprenant l'exemple précédent, on identifie la quatrième colonne dans le bloc filtré déphasé comme étant une colonne de référence. On obtient ainsi directement trois premiers symboles complexes reconstruits : *a1, b3* et *d1.*

On identifie ensuite 2N deuxièmes éléments dans le bloc filtré déphasé, par exemple les éléments :

$$Re(b2).\left(h_2^f\right)^2 \, , \qquad -jRe(c2)\left(h_2^f\right)^2 + Im(b2).\left(h_2^f\right)^2 \, , \qquad Re(c2).\left(h_2^f\right)^2 + \sqrt{-1}Im(b2).\left(h_2^f\right)^2 \, ,$$

$$-\sqrt{-1}Re(c3).\left(h_2^f\right)^2 + Im(c2).\left(h_2^f\right)^2, \quad Re(c3).\left(h_2^f\right)^2 + jIm(c2).\left(h_2^f\right)^2, \quad Im(c3).\left(h_2^f\right)^2,$$

et on somme deux à deux les parties réelles de ces éléments.

On obtient ainsi trois nouveaux symboles reconstruits :

$$\sqrt{2}\left(Re\left(Re(b2).\left(h_2^f\right)^2\right) + jRe\left(-jRe(c2)\left(h_2^f\right)^2 + Im(b2).\left(h_2^f\right)^2\right)\right)$$

$$\sqrt{2}\left(Re\left(Re(c2).\left(h_2^f\right)^2 + \sqrt{-1}Im(b2).\left(h_2^f\right)^2\right) + jRe\left(-\sqrt{-1}Re(c3).\left(h_2^f\right)^2 + Im(c2).\left(h_2^f\right)^2\right)\right)$$

$$\sqrt{2}\left(Re\left(Re(c3).\left(h_2^f\right)^2 + jIm(c2).\left(h_2^f\right)^2\right) + jRe\left(Im(c3).\left(h_2^f\right)^2\right)\right)$$

On note que la multiplication par le terme en $\sqrt{2}$ permet de normaliser l'amplitude des symboles complexes reconstruits.

Enfin, pour les éléments restants du bloc filtré déphasé, on somme deux à deux un élément d'une ligne du bloc filtré déphasé avec le conjugué d'un autre élément de la ligne, de façon à reconstruire les six symboles complexes restants :

$$\left(-ja3^{*}.h_{1}^{f}h_{3}^{f} + a2.\left(h_{3}^{f}\right)^{2}\right) + \left(-ja3.h_{1}^{f}h_{3}^{f} + a2^{*}.\left(h_{1}^{f}\right)^{2}\right)^{*}$$

$$\left(a3^{*}.\left(h_{1}^{f}\right)^{2} + \sqrt{-1}a2.h_{1}^{f}h_{3}^{f}\right)^{*} + \left(a3.\left(h_{3}^{f}\right)^{2} + \sqrt{-1}a2^{*}.h_{1}^{f}h_{3}^{f}\right)$$

$$\left(b1.\left(h_{3}^{f}\right)^{2}\right) + \left(b1^{*}.\left(h_{1}^{f}\right)^{2}\right)^{*}$$

$$\left(-\sqrt{-1}d2.h_{1}^{f}h_{3}^{f} + c1^{*}.\left(h_{3}^{f}\right)^{2}\right)^{*} + \left(-\sqrt{-1}d2^{*}.h_{1}^{f}h_{3}^{f} + c1.\left(h_{1}^{f}\right)^{2}\right)$$

$$\left(d2.\left(h_{1}^{f}\right)^{2} + jc1^{*}.h_{1}^{f}h_{3}^{f}\right) + \left(d2^{*}.\left(h_{3}^{f}\right)^{2} + j\,c1.h_{1}^{f}h_{3}^{f}\right)^{*}$$

$$\left(d3.\left(h_{1}^{f}\right)^{2}\right) + \left(d3^{*}.\left(h_{3}^{f}\right)^{2}\right)^{*}$$

Les douze symboles complexes ainsi reconstruits peuvent être placés dans le bloc reconstruit $\hat{C}_{N\times K}$, en tenant compte de la façon de construire le bloc étendu à partir du bloc de base côté modulation.

De manière plus générale, le bloc reconstruit $\hat{C}_{N\times K}$ peut être obtenu à partir des équations suivantes :

- si $K$ est pair:

$$\hat{C}_{n,k} = \begin{cases} \hat{C}_{n,k} = \tilde{C}_{n,k} + \tilde{C}_{n,K-k}^{*}, k \in [0, (K-1)/2 - 1] \\ \hat{C}_{n,(K-1)/2} = \tilde{C}_{n,K-1} \\ \hat{C}_{n,k+(K-1)/2+1} = \tilde{C}_{n,k+K} + (\tilde{C}_{n,2K-1-k})^{*}, k \in [0, (K-1)/2 - 1] \end{cases}$$

- si $K$ est impair :

$$\hat{C}_{n,k} = \begin{cases} \hat{C}_{n,k} = \tilde{C}_{n,k} + \tilde{C}_{n,K-k}^{*}, k \in [0, (K/2) - 2] \\ \hat{C}_{n,(K/2)-1} = \sqrt{2}\left(\Re\{\tilde{C}_{n,(K/2)-1}\} + j\Re\{\tilde{C}_{m,(K/2)-1+K}\}\right) \\ \hat{C}_{n,K/2} = \tilde{C}_{n,K-1} \\ \hat{C}_{n,k+K/2+1} = \tilde{C}_{n,k+K} + (\tilde{C}_{n,2K-1-k})^{*}k \in [0, (K/2) - 2] \end{cases}$$

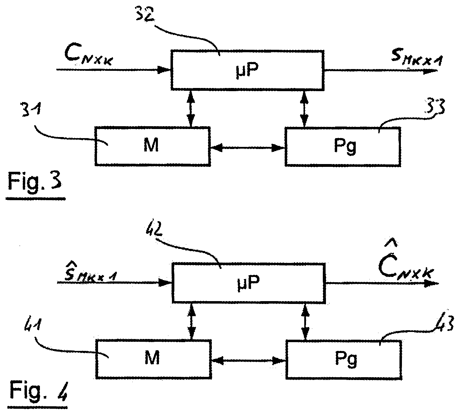

On présente par ailleurs, en relation avec les figures 3 et 4 respectivement, la structure simplifiée d'un dispositif de modulation mettant notamment en œuvre une modulation de type FB-OFDM et la structure d'un dispositif de démodulation mettant notamment en œuvre une démodulation de type FB-OFDM selon un mode de réalisation particulier de l'invention.

Comme illustré en figure 3, un modulateur selon un mode de réalisation particulier de l'invention comprend une mémoire 31 comprenant une mémoire tampon, une unité de traitement 32, équipée par exemple d'un microprocesseur $\mu$P, et pilotée par le programme d'ordinateur 33, mettant en œuvre le procédé de modulation selon un mode de réalisation de l'invention.

A l'initialisation, les instructions de code du programme d'ordinateur 33 sont par exemple chargées dans une mémoire RAM avant d'être exécutées par le processeur de l'unité de traitement 32. L'unité de traitement 32 reçoit en entrée au moins un bloc de base de symboles complexes, noté $C_{N\times K}$. Le microprocesseur de l'unité de traitement 32 met en œuvre les étapes du procédé de modulation décrit précédemment, selon les instructions du programme d'ordinateur 33, pour générer un signal à porteuses multiples formé de $MK$ échantillons temporels $s_{MK \times 1}$. Pour cela, le modulateur comprend, outre la mémoire tampon 31 :

- un module d'extension du bloc de base $C_{N \times K}$, délivrant un bloc de $N \times (2K - 1)$ éléments, dit bloc étendu $\bar{\mathbf{C}}^E_{N \times (2K+1)}$, construit comme décrit précédemment ;

- un module de déphasage du bloc étendu $\bar{\mathbf{C}}^E_{N \times (2K+1)}$, délivrant un bloc étendu déphasé $\mathbf{C}^E_{N \times (2K+1)}$ ;

- un module de filtrage du bloc étendu déphasé $\mathbf{C}^E_{N \times (2K+1)}$, délivrant un bloc de $N \times (2K - 1)$ éléments filtrés, dit bloc filtré $X_{N \times (2K+1)}$,

- un module de mappage des $N \times (2K - 1)$ éléments filtrés du bloc filtré $X_{N \times (2K+1)}$ sur $MK$ échantillons fréquentiels, délivrant un vecteur $y_{MK \times 1}$, avec $M$ le nombre total de porteuses et $M \geq N$;

- éventuellement un module d'entrelacement des échantillons fréquentiels, délivrant un vecteur $\tilde{y}_{MK \times 1}$ de $MK$ échantillons fréquentiels entrelacés ;

- un module de transformation des $MK$ échantillons fréquentiels, éventuellement entrelacés, du domaine fréquentiel vers le domaine temporel, délivrant les $MK$ échantillons temporels $S_{MK \times 1}$ formant le signal à porteuses multiples.

Ces modules sont pilotés par le microprocesseur de l'unité de traitement 32.

Comme illustré en figure 4, un démodulateur selon un mode de réalisation particulier de l'invention comprend quant à lui une mémoire 41 comprenant une mémoire tampon, une unité de traitement 42, équipée par exemple d'un microprocesseur µP, et pilotée par le programme d'ordinateur 43, mettant en œuvre le procédé de démodulation selon un mode de réalisation de l'invention.

A l'initialisation, les instructions de code du programme d'ordinateur 43 sont par exemple chargées dans une mémoire RAM avant d'être exécutées par le processeur de l'unité de traitement 42. L'unité de traitement 42 reçoit en entrée MK échantillons temporels $\hat{s}_{MK \times 1}$ formant le signal à porteuses multiples, pour reconstruire au moins un bloc de symboles complexes $\hat{C}_{N \times K}$. Le microprocesseur de l'unité de traitement 42 met en œuvre les étapes du procédé de démodulation décrit précédemment, selon les instructions du programme d'ordinateur 43, pour reconstruire au moins un bloc de symboles. Pour cela, le démodulateur comprend, outre la mémoire tampon 41 :

- un module de transformation des MK échantillons temporels $\hat{s}_{MK \times 1}$ du signal à porteuses multiples du domaine temporel vers le domaine fréquentiel, délivrant $MK$ échantillons fréquentiels $\hat{y}_{MK \times 1}$ (ou éventuellement $\hat{\tilde{y}}_{MK \times 1}$ si un entrelacement est mis en œuvre côté modulation), avec $M$ et $K$ des entiers tels que $M > 1$ et $K > 1$,

- éventuellement un module de désentrelacement des échantillons fréquentiels, délivrant un vecteur $\hat{y}_{MK \times 1}$ de $MK$ échantillons fréquentiels desentrelacés;

- un module de mappage des $MK$ échantillons fréquentiels $\hat{y}_{MK \times 1}$, éventuellement désentrelacés, sur un bloc de $N \times (2K - 1)$ éléments, avec $N$ un entier tel que $M \geq N > 1$, dit bloc démappé $\hat{X}_{N \times (2K+1)}$,

- un module de filtrage du bloc démappé $\hat{X}_{N \times (2K+1)}$, délivrant un bloc de $N \times (2K - 1)$ éléments filtrés, dit bloc filtré $\hat{\mathbf{C}}^E_{N \times (2K+1)}$,

- un module de déphasage du bloc filtré $\hat{\mathbf{C}}^E_{N \times (2K+1)}$, délivrant un bloc filtré déphasé $\hat{\tilde{\mathbf{C}}}^E_{N \times (2K+1)}$ ;

- un module de reconstruction d'un bloc de base à partir du bloc filtré déphasé $\hat{\tilde{\mathbf{C}}}^E_{N \times (2K+1)}$ délivrant un bloc de $NxK$ symboles complexes reconstruits, dit bloc reconstruit $\hat{C}_{N \times K}$, comme décrit précédemment.

Ces modules sont pilotés par le microprocesseur de l'unité de traitement 42.

**Revendications**

1. Procédé de modulation de symboles complexes, délivrant un signal à porteuses multiples, **caractérisé en ce qu'**il met en œuvre les étapes suivantes, pour au moins un bloc de $NxK$ symboles complexes, dit bloc de base, avec N le nombre de porteuses allouées à un utilisateur, $N$ et $K$ des entiers tels que $N > 1$ et $K \geq 1$ :

- extension (11) dudit bloc de base, délivrant un bloc de $N\times(2K - 1)$ éléments, dit bloc étendu, comprenant :

  ∘ si $K$ est impair :

  - une colonne comprenant $N$ éléments correspondant à $N$ premiers symboles complexes dudit bloc de base, dite colonne de référence ;
  - $2K - 2$ colonnes comprenant $N(2K - 2)$ éléments, dont $N(K - 1)$ éléments correspondant aux $NK - N$ symboles complexes restants dudit bloc de base et $N(K - 1)$ éléments correspondant aux conjugués desdits $NK - N$ symboles complexes restants dudit bloc de base ;

  ∘ si $K$ est pair :

  - une colonne comprenant $N$ éléments correspondant à $N$ premiers symboles complexes dudit bloc de base, dite colonne de référence ;
  - deux colonnes comprenant $2N$ éléments, dont $N$ éléments correspondant à la partie réelle de $N$ deuxièmes symboles complexes dudit bloc de base, distincts desdits $N$ premiers symboles complexes, et $N$ éléments correspondant à la partie imaginaire desdits $N$ deuxièmes symboles complexes ;
  - $2K - 4$ colonnes comprenant $N(2K - 4)$ éléments, dont $N(K - 2)$ éléments correspondant aux $NK - 2N$ symboles complexes restants dudit bloc de base et $N(K - 2)$ éléments correspondant aux conjugués desdits $NK - 2N$ symboles complexes restants dudit bloc de base ;

- déphasage (12) dudit bloc étendu, délivrant un bloc étendu déphasé ;
- filtrage (13) dudit bloc étendu déphasé, délivrant un bloc de $N\times(2K - 1)$ éléments filtrés, dit bloc filtré,
- mappage (14) des $N\times(2K - 1)$ éléments filtrés dudit bloc filtré sur $MK$ échantillons fréquentiels, avec $M$ le nombre total de porteuses et $M \geq N$,
ladite étape de mappage (14) mettant en œuvre, pour chaque ligne dudit bloc filtré, un décalage cyclique modulo $MK$, permettant d'amener l'élément appartenant à ladite colonne de référence en $([(n + m)K \bmod MK] + 1)$-ième position, avec $m$ l'indice de la première porteuse allouée à un utilisateur donné, avec $m$ allant de 0 à $M - N - 1$ et $n$ l'indice de la ligne allant de 0 à $(N-1)$, et une sommation colonne par colonne des éléments obtenus après
- transformation (16) desdits $MK$ échantillons fréquentiels du domaine fréquentiel vers le domaine temporel, délivrant ledit signal à porteuses multiples.

2. Procédé de modulation selon la revendication 1, **caractérisé en ce que** ladite étape d'extension (11) met en œuvre les sous-étapes suivantes :

- sélection aléatoire desdits premiers N symboles complexes dudit bloc de base, et affectation à ladite colonne de référence, correspondant à la colonne centrale dudit bloc étendu ;

  ∘ si $K$ est impair :

  - détermination des conjugués des $N(K - 1)$ symboles complexes restants dudit bloc de base ;
  - affectation d'une première moitié desdits $N(K - 1)$ symboles complexes restants, et de leur conjugué respectif, à $(K - 1)$ colonnes à gauche de ladite colonne de référence, selon une relation de symétrie entre lesdits symboles complexes restants et leur conjugué respectif, et
  - affectation d'une deuxième moitié desdits $N(K - 1)$ symboles complexes restants, et de leur conjugué respectif, à $(K - 1)$ colonnes à droite de ladite colonne de référence, selon une relation de symétrie entre lesdits symboles complexes restants et leur conjugué respectif,

  ∘ si $K$ est pair :

  - sélection aléatoire desdits $N$ deuxièmes symboles complexes dudit bloc de base ;
  - détermination de la partie réelle et de la partie imaginaire desdits $N$ deuxièmes symboles complexes ;
  - affectation d'une desdites parties réelle ou imaginaire de chacun desdits $N$ deuxièmes symboles complexes à une colonne centrale parmi les colonnes à gauche de ladite colonne de référence dudit bloc étendu, dite colonne centrale gauche ;
  - affectation de l'autre desdites parties réelle ou imaginaire de chacun desdits $N$ deuxièmes symboles complexes à une colonne centrale parmi les colonnes à droite de ladite colonne de référence dudit bloc étendu, dite colonne centrale droite ;

- détermination des conjugués des $N(K-2)$ symboles complexes restants dudit bloc de base ;
- affectation d'une première moitié desdits $N(K-2)$ symboles complexes restants, et de leur conjugué respectif, aux colonnes à gauche de ladite colonne de référence, selon une relation de symétrie entre lesdits symboles complexes restants et leur conjugué respectif par rapport à ladite colonne centrale gauche, et
- affectation d'une deuxième moitié desdits $N(K-2)$ symboles complexes restants, et de leur conjugué respectif, aux colonnes à droite de ladite colonne de référence, selon une relation de symétrie entre lesdits symboles complexes restants et leur conjugué respectif par rapport à ladite colonne centrale droite.

3. Procédé de modulation selon l'une quelconque des revendications 1 et 2, **caractérisé en ce que** ladite étape de déphasage (12) met en œuvre un déphasage ligne par ligne dudit bloc étendu, mettant en œuvre une multiplication des éléments d'une *(n+1)*-ième ligne dudit bloc étendu, à l'exception de l'élément correspondant à ladite colonne de référence, par une valeur égale à $\left(\sqrt{-1}\right)^n$, avec n allant de 0 à *N-1*.

4. Procédé de modulation selon l'une quelconque des revendications 1 à 3, **caractérisé en ce que** ledit bloc étendu déphasé $\mathbf{C}^{\mathrm{E}}_{\mathrm{N}\times(2\mathrm{K}-1)}$ est obtenu à partir des équations suivantes :

$$\mathbf{C}^{\mathrm{E}}_{\mathrm{N}\times(2\mathrm{K}-1)} = \mathbf{J}_{N\times(2K-1)} \odot \bar{\mathbf{C}}^{\mathrm{E}}_{\mathrm{N}\times(2\mathrm{K}-1)}$$

avec :

$$\mathbf{J}_{N\times 2K-1} = \begin{bmatrix} \mathbf{j}^0_{1\times 2K-1} \\ \vdots \\ \mathbf{j}^{N-1}_{1\times 2K-1} \end{bmatrix}$$

- si *K* pair :

$$\bar{\mathbf{C}}^{E}_{N\times 2K-1} = \begin{cases} \bar{C}^E_{n,k} = (\bar{C}^E_{n,K-k})^* = C_{n,k}, k \in [0,(K/2)-2] \\ \bar{C}^E_{n,(K/2)-1} = \sqrt{2}\Re\{C_{n,(K/2)-1}\} \\ \bar{C}^E_{n,(K/2)-1+K} = \sqrt{2}\Im\{C_{n,(K/2)-1}\} \\ \bar{C}^E_{n,K-1} = C_{n,K/2} \\ \bar{C}^E_{n,k+K} = (\bar{C}^E_{n,2K-1-k})^* = C_{n,k+K/2+1}, k \in [0,(K/2)-2] \end{cases}$$

- si *K* est impair :

$$\bar{\mathbf{C}}^{E}_{N\times 2K-1} = \begin{cases} \bar{C}^E_{n,k} = (\bar{C}^E_{n,K-k})^* = C_{n,k}, k \in [0,(K-1)/2-1] \\ \bar{C}^E_{n,K-1} = C_{n,(K-1)/2} \\ \bar{C}^E_{n,k+K} = (\bar{C}^E_{n,2K-1-k})^* = C_{n,k+(K-1)/2+1}, k \in [0,(K-1)/2-1] \end{cases}$$

- $C_{N\times K} = [C_{n,k}]_{n=0,..,N-1\ et\ k=0,..,K-1}$ ledit bloc de base,
- *n* un entier allant de 0 à *N-1,*
- *k* un entier allant de 0 à *K-1,*
- * l'opérateur conjugué,
- $\odot$ le produit de Hadamard,
- $\mathbf{j}^n_{1\times(2K-1)}$ un vecteur dont tous les éléments sont égaux à $\left(\sqrt{-1}\right)^n$, sauf l'élément de même indice que ladite colonne de référence qui est égal 1.

5. Procédé de modulation selon l'une quelconque des revendications 1 à 4, **caractérisé en ce que** ladite étape de filtrage (13) met en œuvre un filtre de longueur 2$K$ - 1, tel que la valeur du coefficient du filtre de même indice que ladite colonne de référence, dit coefficient de référence, est égale à 1, et les valeurs des autres coefficients du filtre sont symétriques par rapport audit coefficient de référence.

6. Procédé de modulation selon l'une quelconque des revendications 1 à 5, **caractérisé en ce que**, lorsque $N < M$, on affecte une valeur nulle au premier élément de chaque colonne dudit bloc étendu précédent ladite colonne de référence, ou bien une valeur nulle au dernier élément de chaque colonne dudit bloc étendu suivant ladite colonne de référence.

7. Procédé de modulation selon l'une quelconque des revendications 1 à 6, **caractérisé en ce que** $K$ est strictement supérieur à 1.

8. Procédé de modulation selon l'une quelconque des revendications 1 à 7, **caractérisé en ce qu'**il met également en œuvre un entrelacement (15) desdits échantillons fréquentiels obtenus en sortie de ladite étape de mappage, préalablement à ladite étape de transformation du domaine fréquentiel vers le domaine temporel.

9. Dispositif de modulation de symboles complexes, délivrant un signal à porteuses multiples,
**caractérisé en ce qu'**il comprend les modules suivants, activés pour au moins un bloc de $N \times K$ symboles complexes, dit bloc de base, avec $N$ le nombre de porteuses allouées à un utilisateur, $N$ et $K$ des entiers tels que $N > 1$ et $K \geq 1$ :

- un module d'extension dudit bloc de base, délivrant un bloc de $N \times (2K$ - 1) éléments, dit bloc étendu, comprenant :

  ○ si $K$ est impair :

    ▪ une colonne comprenant $N$ éléments correspondant à $N$ premiers symboles complexes dudit bloc de base, dite colonne de référence ;
    ▪ 2$K$ - 2 colonnes comprenant $N(2K$ - 2) éléments, dont $N(K$ - 1) éléments correspondant aux $NK$ - $N$ symboles complexes restants dudit bloc de base et $N(K$ - 1) éléments correspondant aux conjugués desdits $NK$ - $N$ symboles complexes restants dudit bloc de base ;

  ○ si $K$ est pair :

    ▪ une colonne comprenant $N$ éléments correspondant à $N$ premiers symboles complexes dudit bloc de base, dite colonne de référence ;
    ▪ deux colonnes comprenant 2$N$ éléments, dont $N$ éléments correspondant à la partie réelle de $N$ deuxièmes symboles complexes dudit bloc de base, distincts desdits $N$ premiers symboles complexes, et $N$ éléments correspondant à la partie imaginaire desdits $N$ deuxièmes symboles complexes ;
    ▪ 2$K$ - 4 colonnes comprenant $N(2K$ - 4) éléments, dont $N(K$ - 2) éléments correspondant aux $NK$ - 2$N$ symboles complexes restants dudit bloc de base et $N(K$ - 2) éléments correspondant aux conjugués desdits $NK$ - 2$N$ symboles complexes restants dudit bloc de base ;

- un module de déphasage dudit bloc étendu, délivrant un bloc étendu déphasé ;
- un module de filtrage dudit bloc étendu déphasé, délivrant un bloc de $N \times (2K$ - 1) éléments filtrés, dit bloc filtré,
- un module de mappage des $N \times (2K$ - 1) éléments filtrés dudit bloc filtré sur $MK$ échantillons fréquentiels, avec $M$ le nombre total de porteuses et $M \geq N$,
ledit module de mappage mettant en œuvre, pour chaque ligne dudit bloc filtré, un décalage cyclique modulo $MK$, permettant d'amener l'élément appartenant à ladite colonne de référence en ([(n + m)K mod MK] + 1)-ième position, avec $m$ l'indice de la première porteuse allouée à un utilisateur donné, avec m allant de 0 à $M$ - $N$ - 1 et $n$ l'indice de la ligne allant de 0 à ($N$-1), et une sommation colonne par colonne des éléments obtenus après décalage cyclique ;
- un module de transformation desdits $MK$ échantillons fréquentiels du domaine fréquentiel vers le domaine temporel, délivrant ledit signal à porteuses multiples.

10. Procédé de démodulation d'un signal à porteuses multiples, délivrant au moins un bloc de symboles complexes reconstruits,
**caractérisé en ce qu'**il met en œuvre les étapes suivantes :

- transformation (21) dudit signal à porteuses multiples du domaine temporel vers le domaine fréquentiel, délivrant *MK* échantillons fréquentiels, avec *M* et *K* des entiers tels que $M > 1$ et $K \geq 1$,

mappage (23) desdits *MK* échantillons fréquentiels sur un bloc de $N \times (2K - 1)$ éléments, avec N le nombre de porteuses allouées à un utilisateur, N étant un entier tel que $M \geq N > 1$, dit bloc démappé,

- ladite étape de mappage (23) mettant en œuvre, pour construire chaque *(n+1)-ième* ligne dudit bloc démappé, une extraction de *(2K-1)* échantillons fréquentiels parmi lesdits *MK* échantillons fréquentiels, à partir du $([(m + n)K - (K - 1)] \mod MK) + 1$ -ième échantillon fréquentiel, avec *m* l'indice de la première porteuse allouée à un utilisateur donné ;filtrage (24) dudit bloc démappé, délivrant un bloc de $N \times (2K - 1)$ éléments filtrés, dit bloc filtré,
- déphasage (25) dudit bloc filtré, délivrant un bloc filtré déphasé ;
- reconstruction (26) d'un bloc de base à partir dudit bloc filtré déphasé, délivrant un bloc de *NxK* symboles complexes reconstruits, dit bloc reconstruit, mettant en œuvre :

  ◦ si *K* est impair : identification d'une colonne de référence de *N* premiers éléments dans ledit bloc filtré déphasé, délivrant *N* premiers symboles complexes reconstruits, et, pour les $N \times (2K - 1) - N$ éléments restants dudit bloc filtré déphasé, sommation deux à deux d'un élément d'une ligne dudit bloc filtré déphasé avec le conjugué d'un autre élément de ladite ligne, délivrant $\left\lfloor \dfrac{N \times (2K-1) - N}{2} \right.$ symboles complexes reconstruits,

  ◦ si *K* est pair : identification d'une colonne de référence de *N* premiers éléments dans ledit bloc filtré déphasé, délivrant *N* premiers symboles complexes reconstruits, pour *2N* deuxièmes éléments dudit bloc filtré déphasé, sommation deux à deux des parties réelles desdits *2N* deuxièmes éléments, délivrant *N* deuxièmes symboles complexes reconstruits, et pour les $N \times (2K - 1) - 3N$ éléments restants dudit bloc filtré déphasé, sommation deux à deux d'un élément d'une ligne dudit bloc filtré déphasé avec le conjugué d'un autre élément de ladite ligne, délivrant $\dfrac{N \times (2K-1) - 3N}{2}$ symboles complexes reconstruits.

**11.** Procédé de démodulation selon la revendication 10, **caractérisé en ce que** ledit bloc reconstruit $\hat{C}_{N \times K}$ est obtenu à partir des équations suivantes :

- si *K* est impair :

$$\hat{C}_{n,k} = \begin{cases} \hat{C}_{n,k} = \tilde{C}_{n,k} + \tilde{C}_{n,K-k}^*, k \in [0, (K/2) - 2] \\ \hat{C}_{n,(K/2)-1} = \sqrt{2} \left( \Re\{\tilde{C}_{n,(K/2)-1}\} + j\Re\{\tilde{C}_{m,(K/2)-1+K}\} \right) \\ \hat{C}_{n,K/2} = \tilde{C}_{n,K-1} \\ \hat{C}_{n,k+K/2+1} = \tilde{C}_{n,k+K} + (\tilde{C}_{n,2K-1-k})^* k \in [0, (K/2) - 2] \end{cases}$$

- si *K* est pair :

$$\hat{C}_{n,k} = \begin{cases} \hat{C}_{n,k} = \tilde{C}_{n,k} + \tilde{C}_{n,K-k}^*, k \in [0, (K-1)/2 - 1] \\ \hat{C}_{n,(K-1)/2} = \tilde{C}_{n,K-1} \\ \hat{C}_{n,k+(K-1)/2+1} = \tilde{C}_{n,k+K} + (\tilde{C}_{n,2K-1-k})^*, k \in [0, (K-1)/2 - 1] \end{cases}$$

avec :

$$- \quad \tilde{\mathbf{C}}_{N \times (2K-1)} = \mathbf{J}_{N \times (2K-1)}^* \odot \hat{\mathbf{C}}_{N \times (2K-1)}^{\mathrm{E}}$$

$$\mathbf{J}_{N \times 2K-1} = \begin{bmatrix} \mathbf{j}_{1 \times 2K-1}^0 \\ \vdots \\ \mathbf{j}_{1 \times 2K-1}^{N-1} \end{bmatrix}$$

- $\hat{C}^{E}_{N\times(2K-1)}$ ledit bloc filtré ;
- $\tilde{C}_{N\times(2K-1)} = [\tilde{C}_{n,l}]_{n=0,..,N-1}$ et $l=0,..,2K-1$
- $\hat{C}_{N\times K} = [\hat{C}_{n,k}]_{n=0,..,N-1}$ et $k=0,..,K-1$
- $n$ un entier allant de 0 à $N$-1,
- $k$ un entier allant de 0 à $K$-1,
- * l'opérateur conjugué,
- $\odot$ le produit de Hadamard,

- $\mathbf{j}^{n}_{1\times(2K-1)}$ un vecteur dont tous les éléments sont égaux à $\left(\sqrt{-1}\right)^{n}$, sauf l'élément de même indice que ladite colonne de référence qui est égal 1.

**12.** Dispositif de démodulation d'un signal à porteuses multiples, délivrant au moins un bloc de symboles complexes reconstruits,
**caractérisé en ce qu'**il comprend les modules suivants :

- un module de transformation dudit signal à porteuses multiples du domaine temporel vers le domaine fréquentiel, délivrant $MK$ échantillons fréquentiels, avec $M$ et $K$ des entiers tels que $M > 1$ et $K \geq 1$,
- un module de mappage desdits $MK$ échantillons fréquentiels sur un bloc de $N\times(2K$ - 1$)$ éléments, avec $N$ le nombre de porteuses allouées à un utilisateur, $N$ étant un entier tel que $M \geq N > 1$, dit bloc démappé,
ledit module de mappage mettant en œuvre, pour construire chaque *(n+1)-ième* ligne dudit bloc démappé, une extraction de *(2K-1)* échantillons fréquentiels parmi lesdits $MK$ échantillons fréquentiels, à partir du ([$(m + n)K$ - $(K$ - 1)]$mod\ MK$) + 1) -ième échantillon fréquentiel, avec $m$ l'indice de la première porteuse allouée à un utilisateur donné ;
- un module de filtrage dudit bloc démappé, délivrant un bloc de $N\times(2K$ - 1$)$ éléments filtrés, dit bloc filtré,
- un module de déphasage dudit bloc filtré, délivrant un bloc filtré déphasé ;
- un module de reconstruction d'un bloc de base à partir dudit bloc filtré déphasé, délivrant un bloc de $NxK$ symboles complexes reconstruits, dit bloc reconstruit, mettant en œuvre :

  ◦ si $K$ est impair : des moyens d'identification d'une colonne de référence de N premiers éléments dans ledit bloc filtré déphasé, délivrant $N$ premiers symboles complexes reconstruits, et, pour les $N\times(2K$ - 1$)$ - $N$ éléments restants dudit bloc filtré déphasé, des moyens de sommation deux à deux d'un élément d'une ligne dudit bloc filtré déphasé avec le conjugué d'un autre élément de ladite ligne, délivrant $\frac{N\times(2K-1)-N}{2}$ symboles complexes reconstruits,
  ◦ si $K$ est pair : des moyens d'identification d'une colonne de référence de $N$ premiers éléments dans ledit bloc filtré déphasé, délivrant $N$ premiers symboles complexes reconstruits, pour $2N$ deuxièmes éléments dudit bloc filtré déphasé, des moyens de sommation deux à deux des parties réelles desdits $2N$ deuxièmes éléments, délivrant $N$ deuxièmes symboles complexes reconstruits, et pour les $N\times(2K$ - 1$)$ - $3N$ éléments restants dudit bloc filtré déphasé, des moyens de sommation deux à deux d'un élément d'une ligne dudit bloc filtré déphasé avec le conjugué d'un autre élément de ladite ligne, délivrant $\frac{N\times(2K-1)-3N}{2}$ symboles complexes reconstruits.

**13.** Programme d'ordinateur comportant des instructions pour la mise en œuvre d'un procédé selon la revendication 1 ou selon la revendication 10 lorsque ce programme est exécuté par un processeur.

## Patentansprüche

**1.** Verfahren zur Modulation komplexer Symbole, das ein Mehrträgersignal liefert, **dadurch gekennzeichnet, dass** es die folgenden Schritte für mindestens einen Block von NxK komplexen Symbolen, Basisblock genannt, durchführt, mit N der Anzahl von einem Benutzer zugewiesenen Trägern, N und K ganzen Zahlen, derart, dass gilt N > 1 und K $\geq$ 1:

- Erweiterung (11) des Basisblocks, die einen Block von Nx(2K - 1) Elementen liefert, erweiterter Block genannt, der enthält:

∘ wenn K ungeradzahlig ist:

- eine Spalte, die N Elemente entsprechend N ersten komplexen Symbolen des Basisblocks enthält, Bezugsspalte genannt;
- 2K - 2 Spalten, die N(2K - 2) Elemente enthalten, davon N(K - l) Elemente entsprechend den NK - N verbleibenden komplexen Symbolen des Basisblocks und N(K - l) Elemente entsprechend den Konjugierten der NK - N verbleibenden komplexen Symbolen des Basisblocks;

∘ wenn K geradzahlig ist:

- eine Spalte, die N Elemente entsprechend N ersten komplexen Symbolen des Basisblocks enthält, Bezugsspalte genannt;
- zwei Spalten, die 2N Elemente enthalten, davon N Elemente entsprechend dem Realteil von N zweiten komplexen Symbolen des Basisblocks, die sich von den N ersten komplexen Symbolen unterscheiden, und N Elemente entsprechend dem Imaginärteil der N zweiten komplexen Symbole;
- 2K - 4 Spalten, die N(2K - 4) Elemente enthalten, davon N(K - 2) Elemente entsprechend den NK - 2N verbleibenden komplexen Symbolen des Basisblocks und N(K - 2) Elemente entsprechend den Konjugierten der NK - 2N verbleibenden komplexen Symbole des Basisblocks;

- Phasenverschiebung (12) des erweiterten Blocks, die einen phasenverschobenen erweiterten Block liefert;
- Filterung (13) des phasenverschobenen erweiterten Blocks, die einen Block von Nx(2K - 1) gefilterten Elementen liefert, gefilterter Block genannt,
- Mapping (14) der Nx(2K - 1) gefilterten Elemente des gefilterten Blocks auf MK Frequenztastproben, mit M der Gesamtanzahl von Trägern und $M \geq N$,

wobei der Mapping-Schritt (14) für jede Zeile des gefilterten Blocks eine zyklische Verschiebung Modulo MK, die es ermöglicht, das zur Bezugsspalte gehörende Element in ([(n + m)K mod MK] + 1)-te Position zu bringen, mit m dem Index des einem gegebenen Benutzer zugewiesenen ersten Trägers, mit m von 0 bis M - N - 1 und n dem Index der Zeile, die von 0 bis (N - 1) geht, und eine Summierung Spalte für Spalte der nach zyklischer Verschiebung erhaltenen Elemente durchführt;
- Transformation (16) der MK Frequenztastproben vom Frequenzbereich in den Zeitbereich, die das Mehrträgersignal liefert.

2. Modulationsverfahren nach Anspruch 1, **dadurch gekennzeichnet, dass** der Erweiterungsschritt (11) die folgenden Teilschritte durchführt:

- Zufallsauswahl der N ersten komplexen Symbole des Basisblocks, und Zuordnung zur Bezugsspalte, die der mittleren Spalte des erweiterten Blocks entspricht;

∘ wenn K ungeradzahlig ist:

- Bestimmung der Konjugierten der N(K - 1) verbleibenden komplexen Symbole des Basisblocks;
- Zuordnung einer ersten Hälfte der N(K - l) verbleibenden komplexen Symbole und ihrer jeweiligen Konjugierten zu (K - 1) Spalten links der Bezugsspalte, gemäß einer Symmetriebeziehung zwischen den verbleibenden komplexen Symbolen und ihrer jeweiligen Konjugierten, und
- Zuordnung einer zweiten Hälfte der N(K - 1) verbleibenden komplexen Symbole und ihrer jeweiligen Konjugierten zu (K - 1) Spalten rechts der Bezugsspalte, gemäß einer Symmetriebeziehung zwischen den verbleibenden komplexen Symbolen und ihrer jeweiligen Konjugierten,

∘ wenn K geradzahlig ist:

- Zufallsauswahl der N zweiten komplexen Symbole des Basisblocks;
- Bestimmung des Realteils und des Imaginärteils der N zweiten komplexen Symbole;
- Zuordnung eines der Real- oder Imaginärteile jedes der N zweiten komplexen Symbole zu einer mittleren Spalte zwischen den Spalten links der Bezugsspalte des erweiterten Blocks, linke mittlere Spalte genannt;
- Zuordnung des anderen der Real- oder Imaginärteile jedes der N zweiten komplexen Symbole zu einer mittleren Spalte zwischen den Spalten rechts der Bezugsspalte des erweiterten Blocks, rechte mittlere Spalte genannt;

• Bestimmung der Konjugierten der N(K - 2) verbleibenden komplexen Symbole des Basisblocks;
• Zuordnung einer ersten Hälfte der N(K - 2) verbleibenden komplexen Symbole und ihrer jeweiligen Konjugierten zu den Spalten links der Bezugsspalte, gemäß einer Symmetriebeziehung zwischen den verbleibenden komplexen Symbolen und ihrer jeweiligen Konjugierten bezüglich der linken mittleren Spalte, und
• Zuordnung einer zweiten Hälfte der N(K - 2) verbleibenden komplexen Symbole und ihrer jeweiligen Konjugierten zu den Spalten rechts der Bezugsspalte, gemäß einer Symmetriebeziehung zwischen den verbleibenden komplexen Symbolen und ihrer jeweiligen Konjugierten bezüglich der rechten mittleren Spalte.

3. Modulationsverfahren nach einem der Ansprüche 1 und 2, **dadurch gekennzeichnet, dass** der Schritt der Phasenverschiebung (12) eine Phasenverschiebung Zeile für Zeile des erweiterten Blocks durchführt, die eine Multiplikation der Elemente einer (n + l)-ten Zeile des erweiterten Blocks, mit Ausnahme des Elements entsprechend der Bezugsspalte, mit einem Wert gleich $\left(\sqrt{-1}\right)^{n}$ durchführt, mit n von 0 bis N - 1.

4. Modulationsverfahren nach einem der Ansprüche 1 bis 3, **dadurch gekennzeichnet, dass** der phasenverschobene erweiterte Block $C_{Nx(2K-1)}^{E}$ ausgehend von den folgenden Gleichungen erhalten wird:

$$C_{Nx(2K-1)}^{E} = J_{Nx(2K-1)} \odot \bar{C}N_{Nx(2k-1)}^{E}$$

mit:

$$J_{Nx2K-1} = \begin{bmatrix} j_{1x2K-1}^{0} \\ \vdots \\ j_{1x2K-1}^{N-1} \end{bmatrix}$$

- wenn K geradzahlig ist:

$$\bar{C}_{Nx2K-1}^{E} = \begin{cases} \bar{C}_{n,k}^{E} = \left(\bar{C}_{n,K-k}^{E}\right)^{*} = C_{n,k}, k \in [0, (K/2) - 2] \\ \bar{C}_{n,(K/2)-1}^{E} = \sqrt{2}\, \{C_{n,(K/2)-1}\} \\ \bar{C}_{n,(K/2)-1+K}^{E} = \sqrt{2}\, I\{C_{n,(K/2)-1}\} \\ \bar{C}_{n,K-1}^{E} = C_{n,K/2} \\ \bar{C}_{n,k+K}^{E} = \left(\bar{C}_{n,2K-1-k}^{E}\right)^{*} = C_{n,k+K/2+1}, k \in [0, (K/2) - 2] \end{cases}$$

- wenn K ungeradzahlig ist:

$$\bar{C}_{Nx2K-1}^{E} = \begin{cases} \bar{C}_{n,k}^{E} = \left(\bar{C}_{n,K-k}^{E}\right)^{*} = C_{n,k}, k \in [0, (K-1)/2 - 1] \\ \bar{C}_{n,K-1}^{E} = C_{n,(K-1)/2} \\ \bar{C}_{n,k+K}^{E} = \left(\bar{C}_{n,2K-1-k}^{E}\right)^{*} = C_{n,k+(K-1)/2+1}, k \in [0, (K-1)/2 - 1] \end{cases}$$

- $C_{NxK} = [C_{n,k}]_{n=0,...,N-1 \ und \ k=0,....,K-1}$ dem Basisblock,
- n einer ganzen Zahl von 0 bis N-1,
- k einer ganzen Zahl von 0 bis K-1,
- * dem konjugierten Operator,
- ⊙ dem Hadamard-Produkt,

- $j^n_{1x(2K-1)}$ einem Vektor, von dem alle Elemente gleich $(\sqrt{-1})^n$ sind, außer dem Element mit dem gleichen Index wie die Bezugsspalte, der gleich 1 ist.

5. Modulationsverfahren nach einem der Ansprüche 1 bis 4, **dadurch gekennzeichnet, dass** der Filterungsschritt (13) ein Filter der Länge 2K - 1 einsetzt, derart, dass der Wert des Koeffizienten des Filters mit gleichen Index wie die Bezugsspalte, Bezugskoeffizient genannt, gleich 1 ist, und die Werte der anderen Koeffizienten des Filters bezüglich des Bezugskoeffizienten symmetrisch sind.

6. Modulationsverfahren nach einem der Ansprüche 1 bis 5, **dadurch gekennzeichnet, dass**, wenn gilt N < M, dem ersten Element jeder Spalte des erweiterten Blocks vor der Bezugsspalte ein Wert Null zugeordnet wird, oder dem letzten Element jeder Spalte des erweiterten Blocks nach der Bezugsspalte ein Wert Null zugeordnet wird.

7. Modulationsverfahren nach einem der Ansprüche 1 bis 6, **dadurch gekennzeichnet, dass** K strikt größer als 1 ist.

8. Modulationsverfahren nach einem der Ansprüche 1 bis 7, **dadurch gekennzeichnet, dass** es ebenfalls eine Verschachtelung (15) der am Ausgang des Mapping-Schritts erhaltenen Frequenztastproben vor dem Schritt der Transformation vom Frequenzbereich in den Zeitbereich durchführt.

9. Vorrichtung zur Modulation komplexer Symbole, die ein Mehrträgersignal liefert, **dadurch gekennzeichnet, dass** sie die folgenden Module enthält, die für mindestens einen Block von NxK komplexen Symbolen, Basisblock genannt, aktiviert werden, mit N der Anzahl von einem Benutzer zugewiesenen Trägern, N und K ganzen Zahlen derart, dass gilt N > 1 und K ≥ 1:

   - ein Erweiterungsmodul des Basisblocks, das einen Block von Nx(2K - 1) Elementen liefert, erweiterter Block genannt, der enthält:

      ∘ wenn K ungeradzahlig ist:

         • eine Spalte, die N Elemente entsprechend N ersten komplexen Symbolen des Basisblocks enthält, Bezugsspalte genannt;
         • 2K - 2 Spalten, die N(2K - 2) Elemente enthalten, davon N(K - 1) Elemente entsprechend den NK - N verbleibenden komplexen Symbolen des Basisblocks und N(K - 1) Elemente entsprechend den Konjugierten der NK - N verbleibenden komplexen Symbole des Basisblocks;

      ∘ wenn K geradzahlig ist:

         • eine Spalte, die N Elemente entsprechend N ersten komplexen Symbolen des Basisblocks enthält, Bezugsspalte genannt;
         • zwei Spalten, die 2N Elemente enthalten, davon N Elemente entsprechend dem Realteil von N zweiten komplexen Symbolen des Basisblocks, die sich von den N ersten komplexen Symbolen unterscheiden, und N Elemente entsprechend dem Imaginärteil der N zweiten komplexen Symbole;
         • 2K - 4 Spalten, die N(2K - 4) Elemente enthalten, davon N(K - 2) Elemente entsprechend den NK - 2N verbleibenden komplexen Symbolen des Basisblocks und N(K - 2) Elemente entsprechend den Konjugierten der NK - 2N verbleibenden komplexen Symbole des Basisblocks;

   - ein Phasenverschiebungsmodul des erweiterten Blocks, das einen phasenverschobenen erweiterten Block liefert;
   - ein Filterungsmodul des phasenverschobenen erweiterten Blocks, das einen Block von Nx(2K - 1) gefilterten Elementen liefert, gefilterter Block genannt,
   - ein Mapping-Modul der Nx(2K - 1) gefilterten Elemente des gefilterten Blocks auf MK Frequenztastproben, mit M der Gesamtanzahl von Trägern und M ≥ N,
   wobei das Mapping-Modul für jede Zeile des gefilterten Blocks eine zyklische Verschiebung Modulo MK, die es ermöglicht, das zu der Bezugsspalte gehörende Element in ([(n + m)K mod MK] + 1)-te Position zu bringen, mit m dem Index des einem gegebenen Benutzer zugewiesenen ersten Trägers, mit m von 0 bis M - N - 1 und n dem Index der Zeile von 0 bis (N - 1), und eine Summierung Spalte für Spalte der nach der zyklischen Verschiebung erhaltenen Elemente durchführt;

- ein Transformationsmodul der MK Frequenztastproben vom Frequenzbereich in den Zeitbereich, das das Mehrträgersignal liefert.

**10.** Demodulationsverfahren eines Mehrträgersignals, das mindestens einen Block rekonstruierter komplexer Symbole liefert, **dadurch gekennzeichnet, dass** es die folgenden Schritte durchführt:

- Transformation (21) des Mehrträgersignals vom Zeitbereich in den Frequenzbereich, die MK Frequenztastproben liefert, mit M und K ganzen Zahlen wie M > 1 und K $\geq$ 1,
- Mapping (23) der MK Frequenztastproben auf einen Block von Nx(2K - 1) Elementen, mit N der Anzahl von einem Benutzer zugewiesenen Trägern, wobei N eine ganze Zahl wie M $\geq$ N > 1 ist, demappter Block genannt,
- wobei der Mapping-Schritt (23) für die Konstruktion jeder (n+1)-ten Zeile des demappten Blocks eine Extraktion von {2K - 1} Frequenztastproben unter den MK Frequenztastproben ausgehend von der ([(m + n)K - (K - 1)]mod MK) + 1)-ten Frequenztastprobe durchführt, mit m dem Index des einem gegebenen Benutzer zugewiesenen ersten Trägers; Filterung (24) des demappten Blocks, die einen Block von Nx(2K - 1) gefilterten Elementen liefert, gefilterter Block genannt,
- Phasenverschiebung (25) des gefilterten Blocks, die einen phasenverschobenen gefilterten Block liefert;
- Rekonstruktion (26) eines Basisblocks ausgehend vom phasenverschobenen gefilterten Block, die einen Block von NxK rekonstruierten komplexen Symbolen liefert, rekonstruierter Block genannt, die durchführt:

○ wenn K ungeradzahlig ist: Erkennung einer Bezugsspalte von N ersten Elementen in dem phasenverschobenen gefilterten Block, die N rekonstruierte erste komplexe Symbole liefert, und für die Nx(2K - 1)-N verbleibenden Elemente des phasenverschobenen gefilterten Blocks paarweise Summierung eines Elements einer Zeile des phasenverschobenen gefilterten Blocks mit der Konjugierten eines anderen Elements der Zeile, die $\frac{Nx(2K-1)-N}{2}$ rekonstruierte komplexe Symbole liefert,

○ wenn K geradzahlig ist: Erkennung einer Bezugsspalte von N ersten Elementen im phasenverschobenen gefilterten Block, die N rekonstruierte erste komplexe Symbole liefert, für 2N zweite Elemente des phasenverschobenen gefilterten Blocks paarweise Summierung der Realteile der 2N zweiten Elemente, die N rekonstruierte zweite komplexe Symbole liefert, und für die Nx(2K - 1)- 3N verbleibenden Elemente des phasenverschobenen gefilterten Blocks paarweise Summierung eines Elements einer Zeile des phasenverschobenen gefilterten Blocks mit der Konjugierten eines anderen Elements der Zeile, die $\frac{Nx(2K-1)-3N}{2}$ rekonstruierte komplexe Symbole liefert.

**11.** Demodulationsverfahren nach Anspruch 10, **dadurch gekennzeichnet, dass** der rekonstruierte Block $\hat{C}_{NxK}$ aus-gehend von den folgenden Gleichungen erhalten wird:

- wenn K ungeradzahlig ist:

$$\hat{C}_{n,k} = \begin{cases} \hat{C}_{n,k} = \tilde{C}_{n,k} + \tilde{C}^*_{n,K-k}, k \in [0, (K/2) - 2] \\ \hat{C}_{n,(K/2)-1} = \sqrt{2}\big( \ \{\tilde{C}_{n,(K/2)-1}\} + j \ \{\tilde{C}_m, (K/2) - 1 + K\}\big) \\ \hat{C}_{n,K/2} = \tilde{C}_{n,K-1} \\ \hat{C}_{n,k+K/2+1} = \tilde{C}_{n,k+K} + \big(\tilde{C}_{n,2K-1-k}\big)^* k \in [0, (K/2) - 2] \end{cases}$$

- wenn K geradzahlig ist:

$$\hat{C}_{n,k} = \begin{cases} \hat{C}_{n,k} = \tilde{C}_{n,k} + \tilde{C}^*_{n,K-k}, k \in [0, (K-1)/2 - 1] \\ \hat{C}_{n,(K-1)/2} = \tilde{C}_{n,K-1} \\ \hat{C}_{n,k+(K-1)/2+1} = \tilde{C}_{n,k+K} + \big(\tilde{C}_{n,2K-1-k}\big)^*, k \in [0, (K-1)/2 - 1] \end{cases}$$

mit:

$$\tilde{C}_{Nx(2K-1)} = J^*_{Nx(2K-1)} \odot \hat{C}^E_{Nx(2K-1)}$$

$$J_{Nx2K-1} = \begin{bmatrix} j^0_{1x2K-1} \\ \vdots \\ j^{N-1}_{1x2K-1} \end{bmatrix}$$

- $\hat{C}^E_{Nx(2K-1)}$ dem gefilterten Block;

- $\tilde{C}_{Nx(2K-1)} = [C_{n,l}]_{n=0,...,N-1\ und\ l=0,...,2K-1}$
- $\hat{C}_{NxK} = [C_{n,k}]_{n=0,...,N-1\ und\ k=0,...,K-1}$
- n einer ganzen Zahl von 0 bis N-1,
- k einer ganzen Zahl von 0 bis K-1,
- * dem konjugierten Operator,
- ⊙ dem Hadamard-Produkt,

- $j^n_{1x(2K-1)}$ einem Vektor, von dem alle Elemente gleich $\left(\sqrt{-1}\right)^n$ sind, außer dem Element mit gleichem Index wie die Bezugsspalte, der gleich 1 ist.

12. Vorrichtung zur Demodulation eines Mehrträgersignals, die mindestens einen Block rekonstruierter komplexer Symbole liefert, **dadurch gekennzeichnet, dass** sie die folgenden Module enthält:

- ein Modul zur Transformation des Mehrträgersignals vom Zeitbereich in den Frequenzbereich, das MK Frequenztastproben liefert, mit M und K ganzen Zahlen wie M > 1 und K ≥ 1,
- ein Mapping-Modul der MK Frequenztastproben auf einen Block von Nx(2K - 1) Elementen, mit N der Anzahl von einem Benutzer zugewiesenen Trägern, wobei N eine ganze Zahl wie M ≥ N > 1 ist, demappter Block genannt, wobei das Mapping-Modul zum Konstruieren jeder (n+ 1)-ten Zeile des demappten Blocks eine Extraktion von (2K - 1) Frequenztastproben unter den MK Frequenztastproben ausgehend von der ([(m + n)K - (K - 1)]mod MK) + 1)-ten Frequenztastprobe durchführt, mit m dem Index des einem gegebenen Benutzer zugewiesenen ersten Trägers;
- ein Modul zur Filterung des demappten Blocks, das einen Block von Nx(2K - 1) gefilterten Elementen liefert, gefilterter Block genannt,
- ein Modul zur Phasenverschiebung des gefilterten Blocks, das einen phasenverschobenen gefilterten Block liefert;
- ein Modul zur Rekonstruktion eines Basisblocks ausgehend vom phasenverschobenen gefilterten Block, das einen Block von NxK rekonstruierten komplexen Symbolen liefert, rekonstruierter Block genannt, das einsetzt:

  ◦ wenn K ungeradzahlig ist: Einrichtungen zur Erkennung einer Bezugsspalte von N ersten Elementen im phasenverschobenen gefilterten Block, die N erste rekonstruierte komplexe Symbole liefern, und für die Nx(2K - 1) - N verbleibenden Elemente des phasenverschobenen gefilterten Blocks, Einrichtungen zur paarweisen Summierung eines Elements einer Zeile des phasenverschobenen gefilterten Blocks mit der Konjugierten eines anderen Elements der Zeile, die $\frac{Nx(2K-1)-N}{2}$ rekonstruierte komplexe Symbole liefern,

  ◦ wenn K geradzahlig ist: Einrichtungen zur Erkennung einer Bezugsspalte von N ersten Elementen im phasenverschobenen gefilterten Block, die N rekonstruierte erste komplexe Symbole liefern, für 2N zweite Elemente des phasenverschobenen gefilterten Blocks, Einrichtungen zur paarweise Summierung der Realteile der 2N zweiten Elemente, die N rekonstruierte zweite komplexe Symbole liefern, und für die Nx(2K - 1) - 3N verbleibenden Elemente des phasenverschobenen gefilterten Blocks, Einrichtungen zur paarweise Summierung eines Elements einer Zeile des phasenverschobenen gefilterten Blocks mit der Konjugierten eines anderen Elements der Zeile, die $\frac{Nx(2K-1)-3N}{2}$ rekonstruierte komplexe Symbole liefern.

13. Computerprogramm, das Anweisungen zur Durchführung eines Verfahrens nach Anspruch 1 oder nach Anspruch 10 aufweist, wenn dieses Programm von einem Prozessor ausgeführt wird.

**Claims**

1. Method for modulating complex symbols, providing a multicarrier signal, **characterized in that** it implements the following steps, for at least one block of $N \times K$ complex symbols, called the base block, where $N$ is the number of carriers allocated to a user, $N$ and $K$ being integers such that $N > 1$ and $K \geq 1$:

   - extending (11) said base block, providing a block of $N \times (2K-1)$ elements, called the extended block, comprising:

     ○ if $K$ is odd:

       • a column comprising $N$ elements corresponding to N first complex symbols of said base block, called the reference column;
       • $2K-2$ columns comprising $N(2K-2)$ elements, including $N(K-1)$ elements corresponding to the $NK-N$ remaining complex symbols of said base block and $N(K-1)$ elements corresponding to the conjugates of said $NK-N$ remaining complex symbols of said base block;

     ○ if $K$ is even:

       • a column comprising $N$ elements corresponding to $N$ first complex symbols of said base block, called the reference column;
       • two columns comprising $2N$ elements, including $N$ elements corresponding to the real part of $N$ second complex symbols of said base block, which are separate from said $N$ first complex symbols, and $N$ elements corresponding to the imaginary part of said $N$ second complex symbols;
       • $2K-4$ columns comprising $N(2K-4)$ elements, including $N(K-2)$ elements corresponding to the $NK-2N$ remaining complex symbols of said base block and $N(K-2)$ elements corresponding to the conjugates of said $NK-2N$ remaining complex symbols of said base block;

   - phase shifting (12) said extended block, providing a phase-shifted extended block;
   - filtering (13) said phase-shifted extended block, providing a block of $N \times (2K-1)$ filtered elements, called the filtered block,
   - mapping (14) the $N \times (2K-1)$ filtered elements of said filtered block onto $MK$ frequency samples, where $M$ is the total number of carriers and $M \geq N$, said mapping step (14) implementing, for each line of said filtered block, a cyclic shift modulo $MK$, allowing the element belonging to said reference column to be taken to the $([(n+m)K \bmod MK]+1)$th position, where $m$ is the index of the first carrier allocated to a given user, with $m$ ranging from 0 to $M$-$N$-1, and n is the index of the line ranging from 0 to ($N$-1), and a column-by-column summation of the elements obtained after the cyclic shift;
   - transforming (16) said $MK$ frequency samples from the frequency domain to the time domain, providing said multicarrier signal.

2. Modulation method according to Claim 1, **characterized in that** said extension step (11) implements the following substeps:

   - randomly selecting said first N complex symbols of said base block, and assigning them to said reference column, corresponding to the central column of said extended block;

     ○ if $K$ is odd:

       • determining the conjugates of the $N(K-1)$ remaining complex symbols of said base block;
       • assigning a first half of said $N(K-1)$ remaining complex symbols, and their respective conjugate, to $(K-1)$ columns to the left of said reference column, according to a relationship of symmetry between said remaining complex symbols and their respective conjugate, and
       • assigning a second half of said $N(K-1)$ remaining complex symbols, and their respective conjugate, to $(K-1)$ columns to the right of said reference column, according to a relationship of symmetry between said remaining complex symbols and their respective conjugate,

     ○ if $K$ is even:

       • randomly selecting said $N$ second complex symbols of said base block;

• determining the real part and the imaginary part of said *N* second complex symbols;
• assigning one of said real or imaginary parts of each of said *N* second complex symbols to a central column among the columns to the left of said reference column of said extended block, called the left central column;
• assigning the other of said real or imaginary parts of each of said *N* second complex symbols to a central column among the columns to the right of said reference column of said extended block, called the right central column;
• determining the conjugates of the *N(K-2)* remaining complex symbols of said base block;
• assigning a first half of said *N(K-2)* remaining complex symbols, and their respective conjugate, to the columns to the left of said reference column, according to a relationship of symmetry between said remaining complex symbols and their respective conjugate in relation to said left central column, and
• assigning a second half of said *N(K-2)* remaining complex symbols, and their respective conjugate, to the columns to the right of said reference column, according to a relationship of symmetry between said remaining complex symbols and their respective conjugate in relation to said right central column.

3. Modulation method according to either of Claims 1 and 2, **characterized in that** said phase shifting step (12) implements a line-by-line phase shift for said extended block, implementing a multiplication of the elements of an *(n+1)*th line of said extended block, with the exception of the element corresponding to said reference column, by a value equal to $\left(\sqrt{-1}\right)^n$, where n ranges from 0 to *N-1*.

4. Modulation method according to any one of Claims 1 to 3, **characterized in that** said phase-shifted extended block $C_{Nx(2K-1)}^E$ is obtained from the following equations: where:

$$J_{Nx2K-1} = \begin{bmatrix} j_{1x2K-1}^0 \\ \vdots \\ j_{1x2K-1}^{N-1} \end{bmatrix}$$

- if *K* is even:

$$\bar{C}_{Nx2K-1}^E = \begin{cases} \bar{C}_{n,k}^E = \left(\bar{C}_{n,K-k}^E\right)^* = C_{n,k}, k \in [0,(K/2)-2] \\ \bar{C}_{n,(K/2)-1}^E = \sqrt{2}\,\Re\{C_{n,(K/2)-1}\} \\ \bar{C}_{n,(K/2)-1+K}^E = \sqrt{2}\,\Im\{C_{n,(K/2)-1}\} \\ \bar{C}_{n,K-1}^E = C_{n,K/2} \\ \bar{C}_{n,k+K}^E = \left(\bar{C}_{n,2K-1-k}^E\right)^* = C_{n,k+K/2+1}, k \in [0,(K/2)-2] \end{cases}$$

- if *K* is odd:

$$\bar{C}_{Nx2K-1}^E = \begin{cases} \bar{C}_{n,k}^E = \left(\bar{C}_{n,K-k}^E\right)^* = C_{n,k}, k \in [0,(K-1)/2-1] \\ \bar{C}_{n,K-1}^E = C_{n,(K-1)/2} \\ \bar{C}_{n,k+K}^E = \left(\bar{C}_{n,2K-1-k}^E\right)^* = C_{n,k+(K-1)/2+1}, k \in [0,(K-1)/2-1] \end{cases}$$

- $C_{NxK} = [C_{n,k}]_{n=0,...,N-1\,and\,k=0,...,K-1}$ said base block,
- *n* is an integer ranging from 0 to *N-1,*
- *k* is an integer ranging from 0 to *K-1,*
- * is the conjugate operator,
- $\odot$ is the Hadamard product,

$j^n_{1x(2K-1)}$ is a vector, all the elements of which are equal to $\left(\sqrt{-1}\right)^n$, except the element having the same index as said reference column, which is equal to 1.

5. Modulation method according to any one of Claims 1 to 4, **characterized in that** said filtering step (13) implements a filter of length *2K-1,* such that the value of the coefficient of the filter having the same index as said reference column, called the reference coefficient, is equal to 1, and the values of the other coefficients of the filter are symmetrical in relation to said reference coefficient.

6. Modulation method according to any one of Claims 1 to 5, **characterized in that** when N < *M,* a zero value is assigned to the first element of each column of said extended block preceding said reference column, or else a zero value is assigned to the last element of each column of said extended block following said reference column.

7. Modulation method according to any one of Claims 1 to 6, **characterized in that** *K* is strictly greater than 1.

8. Modulation method according to any one of Claims 1 to 7, **characterized in that** it also implements an interleaving (15) of said frequency samples obtained at the output of said mapping step, prior to said step of transforming the frequency domain to the time domain.

9. Device for modulating complex symbols, providing a multicarrier signal,
   **characterized in that** it comprises the following modules, which are activated for at least one block of $N \times K$ complex symbols, called the base block, where *N* is the number of carriers allocated to a user, *N* and *K* being integers such that *N > 1* and $K \geq 1$:

   - a module for extending said base block, providing a block of $N \times (2K-1)$ elements, called the extended block, comprising:

     o if *K* is odd:

       • a column comprising *N* elements corresponding to *N* first complex symbols of said base block, called the reference column;
       • *2K-2* columns comprising *N(2K-2)* elements, including *N(K-1)* elements corresponding to the *NK-N* remaining complex symbols of said base block and *N(K-1)* elements corresponding to the conjugates of said *NK-N* remaining complex symbols of said base block;

     ∘ if *K* is even:

       • a column comprising *N* elements corresponding to *N* first complex symbols of said base block, called the reference column;
       • two columns comprising *2N* elements, including *N* elements corresponding to the real part of *N* second complex symbols of said base block, which are separate from said *N* first complex symbols, and *N* elements corresponding to the imaginary part of said *N* second complex symbols;
       • *2K-4* columns comprising *N(2K-4)* elements, including *N(K-2)* elements corresponding to the *NK-2N* remaining complex symbols of said base block and *N(K-2)* elements corresponding to the conjugates of said *NK-2N* remaining complex symbols of said base block;

   - a module for phase shifting said extended block, providing a phase-shifted extended block;
   - a module for filtering said phase-shifted extended block, providing a block of $N \times (2K-1)$ filtered elements, called the filtered block,
   - a module for mapping the $N \times (2K-1)$ filtered elements of said filtered block onto *MK* frequency samples, where *M* is the total number of carriers and $M \geq N,$
   said mapping module implementing, for each line of said filtered block, a cyclic shift modulo *MK,* allowing the element belonging to said reference column to be taken to the ([(*n+m*)*K* mod *MK*]+1)th position, where *m* is the index of the first carrier allocated to a given user, with *m* ranging from 0 to *M-N-1,* and *n* is the index of the line ranging from 0 to (*N*-1), and a column-by-column summation of the elements obtained after the cyclic shift;
   - a module for transforming said *MK* frequency samples from the frequency domain to the time domain, providing said multicarrier signal.

**10.** Method for demodulating a multicarrier signal, providing at least one block of reconstructed complex symbols, **characterized in that** it implements the following steps:

- transforming (21) said multicarrier signal from the time domain to the frequency domain, providing MK frequency samples, where M and K are integers such that $M > 1$ and $K \geq 1$,
- mapping (23) said *MK* frequency samples onto a block of $N \times (2K-1)$ elements, where N is the number of carriers allocated to a user, N being an integer such that $M \geq N > 1$, called the unmapped block,

said mapping step (23) implementing, in order to construct each *(n+1)*th line of said unmapped block, an extraction of *(2K-1)* frequency samples among said MK frequency samples from the ([(*m+n)K-(K-1)*]mod *MK)*+1)th frequency sample, where *m* is the index of the first carrier allocated to a given user;
- filtering (24) said unmapped block, providing a block of $N \times (2K-1)$ filtered elements, called the filtered block,
- phase shifting (25) said filtered block, providing a phase-shifted filtered block;
- reconstructing (26) a base block from said phase-shifted filtered block, providing a block of $N \times K$ reconstructed complex symbols, called the reconstructed block, implementing:

  ◦ if *K* is odd: identification of a reference column of *N* first elements in said phase-shifted filtered block, providing *N* first reconstructed complex symbols, and, for the $N \times (2K-1)-N$ remaining elements of said phase-shifted filtered block, two-by-two summation of an element of a line of said phase-shifted filtered block with the conjugate of another element of said line, providing $\dfrac{Nx(2K-1)-N}{2}$ reconstructed complex symbols,

  ◦ if *K* is even: identification of a reference column of *N* first elements in said phase-shifted filtered block, providing *N* first reconstructed complex symbols, for 2N second elements of said phase-shifted filtered block, two-by-two summation of the real parts of said *2N* second elements, providing *N* second reconstructed complex symbols, and, for the $N \times (2K-1)-3N$ remaining elements of said phase-shifted filtered block, two-by-two summation of an element of a line of said phase-shifted filtered block with the conjugate of another element of said line, providing $\dfrac{Nx(2K-1)-3N}{2}$ reconstructed complex symbols.

**11.** Demodulation method according to Claim 10, **characterized in that** said reconstructed block $\hat{C}_{NxK}$ is obtained from the following equations:

- if *K* is odd:

$$\hat{C}_{n,k} = \begin{cases} \hat{C}_{n,k} = \tilde{C}_{n,k} + \tilde{C}^*_{n,K-k}, k \in [0, (K/2) - 2] \\ \hat{C}_{n,(K/2)-1} = \sqrt{2}\big(\Re\{\tilde{C}_{n,(K/2)-1}\} + j\,\Re\{\tilde{C}_{m}, (K/2) - 1 + K\}\big) \\ \hat{C}_{n,K/2} = \tilde{C}_{n,K-1} \\ \hat{C}_{n,k+K/2+1} = \tilde{C}_{n,k+K} + \big(\tilde{C}_{n,2K-1-k}\big)^* k \in [0, (K/2) - 2] \end{cases}$$

- if *K* is even:

$$\hat{C}_{n,k} = \begin{cases} \hat{C}_{n,k} = \tilde{C}_{n,k} + \tilde{C}^*_{n,K-k}, k \in [0, (K-1)/2 - 1] \\ \hat{C}_{n,(K-1)/2} = \tilde{C}_{n,K-1} \\ \hat{C}_{n,k+(K-1)/2+1} = \tilde{C}_{n,k+K} + \big(\tilde{C}_{n,2K-1-k}\big)^*, k \in [0, (K-1)/2 - 1] \end{cases}$$

where:

$$\tilde{C}_{Nx(2K-1)} = J^*_{Nx(2K-1)} \odot \hat{C}^E_{Nx(2K-1)}$$

$$J_{Nx2K-1} = \begin{bmatrix} j^0_{1x2K-1} \\ \vdots \\ j^{N-1}_{1x2K-1} \end{bmatrix}$$

- $\hat{C}^E_{Nx(2K-1)}$ said filtered block;
- $\tilde{C}_{Nx(2K-1)} = [\tilde{C}_{n,l}]_{n=0,...,N-1 \ and \ l=0,...,2K-1}$
- $\hat{C}_{NxK} = [\hat{C}_{n,k}]_{n=0,...,N-1 \ and \ k=0,...,K-1}$
- $n$ is an integer ranging from 0 to $N-1$,
- $k$ is an integer ranging from 0 to $K-1$,
- * is the conjugate operator,
- $\odot$ is the Hadamard product,

- $j^n_{1x(2K-1)}$ is a vector, all the elements of which are equal to $\left(\sqrt{-1}\right)^n$, except the element having the same index as said reference column, which is equal to 1.

12. Device for demodulating a multicarrier signal, providing at least one block of reconstructed complex symbols, **characterized in that** it comprises the following modules:

- a module for transforming said multicarrier signal from the time domain to the frequency domain, providing $MK$ frequency samples, where $M$ and $K$ are integers such that $M > 1$ and $K \geq 1$,
- a module for mapping said MK frequency samples onto a block of $N \times (2K-1)$ elements, where $N$ is the number of carriers allocated to a user, $N$ being an integer such that $M \geq N > 1$, called the unmapped block, said mapping module implementing, in order to construct each $(n+1)$th line of said unmapped block, an extraction of $(2K-1)$ frequency samples among said $MK$ frequency samples from the $([(m+n)K-(K-1)]$mod $MK)+1$)th frequency sample, where $m$ is the index of the first carrier allocated to a given user;
- a module for filtering said unmapped block, providing a block of $N \times (2K-1)$ filtered elements, called the filtered block,
- a module for phase shifting said filtered block, providing a phase-shifted filtered block;
- a module for reconstructing a base block from said phase-shifted filtered block, providing a block of $N \times K$ reconstructed complex symbols, called the reconstructed block, implementing:

  ◦ if $K$ is odd: means for identifying a reference column of $N$ first elements in said phase-shifted filtered block, providing $N$ first reconstructed complex symbols, and, for the $N \times (2K-1)-N$ remaining elements of said phase-shifted filtered block, means for two-by-two summation of an element of a line of said phase-shifted filtered block with the conjugate of another element of said line, providing $\frac{Nx(2K-1)-N}{2}$ reconstructed complex symbols,

  ◦ if $K$ is even: means for identifying a reference column of $N$ first elements in said phase-shifted filtered block, providing $N$ first reconstructed complex symbols, for $2N$ second elements of said phase-shifted filtered block, means for two-by-two summation of the real parts of said $2N$ second elements, providing $N$ second reconstructed complex symbols, and, for the $N \times (2K-1)-3N$ remaining elements of said phase-shifted filtered block, means for two-by-two summation of an element of a line of said phase-shifted filtered block with the conjugate of another element of said line, providing $\frac{Nx(2K-1)-3N}{2}$ reconstructed complex symbols.

13. Computer program having instructions for implementing a method according to Claim 1 or according to Claim 10 when said program is executed by a processor.

Fig. 1

Fig. 2

32

$C_{N \times K}$ → [ μP ] → $S_{MK \times 1}$

31

[ M ] ↔ [ Pg ]

33

**Fig. 3**

42

$\hat{S}_{MK \times 1}$ → [ μP ] → $\hat{C}_{N \times K}$

41

[ M ] ↔ [ Pg ]

43

**Fig. 4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **M. BELLANGER.** FBMC physical layer : a primer. *PHYDYAS,* Juin 2010